# EUROPÄISCHE PATENTSCHRIFT

(11) **EP 1 960 628 B1**
(45) Veröffentlichungstag und Bekanntmachung des Hinweises auf die Patenterteilung: **04.01.2012**
(21) Anmeldenummer: 06818089.2
(22) Anmeldetag: 22.11.2006
(51) Int. Cl.: E05F 15/20

(54) **HALTEVORRICHTUNG FÜR EINE LICHTSCHRANKE SOWIE VERWENDUNGEN DERSELBEN**
RETAINING ARRANGEMENT FOR A LIGHT BARRIER, AND USES THEREOF
DISPOSITIF DE MAINTIEN D'UNE BARRIERE LUMINEUSE ET SES UTILISATIONS

(30) Priorität: 30.11.2005 DE 102005057797; 02.03.2006 DE 102006009713
(43) Veröffentlichungstag der Anmeldung: 27.08.2008
(73) Patentinhaber: Hörmann KG Antriebstechnik, 33803 Steinhagen (DE)
(72) Erfinder: EUTENEUER, Patrick, 49326 Melle (DE); SANKE, Michael, 33378 Rheda-Wiedenbrück (DE)
(74) Vertreter: Kastel, Stefan
(86) Internationale Anmeldenummer: PCT/DE2006/002060
(87) Internationale Veröffentlichungsnummer: WO 2007/062623

(56) Entgegenhaltungen:
- US-A- 5 934 019
- US-A1- 2002 105 430
- US-B1- 6 662 499

## Beschreibung

Die Erfindung betrifft eine Haltevorrichtung zum Befestigen eines Lichtschrankenelements einer Lichtschrankenvorrichtung im Bereich einer durch ein Tor zu verschließenden Öffnung. Außerdem betrifft die Erfindung eine mit einer solchen Haltevorrichtung versehene Lichtschrankenvorrichtung sowie ein mit einer solchen versehenes Torantriebssystem und ein mit solchen Vorrichtungen versehenes Tor. Die Erfindung liegt insbesondere auf dem Gebiet von automatisch angetriebenen Toren sowie auf dem Gebiet von Torantrieben.

Es ist bereits seit langem bekannt, automatisch angetriebene Tore mit einer Schutzvorrichtung zu versehen, um zu vermeiden, dass ein motorisch angetriebenes Torblatt auf ein sich im Torweg befindliches Hindernis auffährt.

So sind sogenannte Schließkantensicherungen weit verbreitet. Es ist dabei eine Ausführungsform auf dem Markt, bei der die Schließkante mit einem Hohlprofil aus elastischem Material versehen ist, wobei durch den Innenraum des Hohlprofils eine Lichtschrankenstrecke geführt ist. Fährt das Tor auf ein Hindernis auf, wird das Hohlprofil zusammengedrückt und damit die Lichtschrankenstrecke unterbrochen. Eine Unterbrechung der Lichtschrankenstrecke führt zu einem Anhalten und/oder einem Reversieren des das Torblatt antreibenden Torantriebes. Bei einer derartigen Lichtschrankenstrecke sind die Elemente der Lichtschrankenvorrichtung an den Endbereichen des Hohlprofiles befestigt.

Als Elemente einer Lichtschrankenvorrichtung oder Lichtschrankenelemente werden im folgenden insbesondere diejenigen Teile einer Lichtschrankenvorrichtung angesehen, welche zum Errichten einer Lichtschrankenstrecke dienen, also insbesondere ein Lichtschrankensender, ein Lichtschrankenempfänger, oder ein für Lichtschranken geeigneter Sende-Empfänger oder ein Reflektor. Die Elemente können auf das Senden, Empfangen bzw. Umlenken irgendeiner Art von Lichtstrahlen oder sonstigen gerichteten, zur Erfassung von Objekten geeigneten elektromagnetischen Strahlen, sei es im sichtbaren oder im unsichtbaren Bereich, insbesondere im Infrarot-Bereich ausgelegt seien.

Aus der WO 88/02 804 ist eine Lichtschrankenvorrichtung an einem Tor mit einer Haltevorrichtung für ein Lichtschrankenelement bekannt, welches ein Einschieben des Lichtschrankenelements in ein unteres Abschlusselement des Torblattes ermöglicht.

Aus der US 5,934,019 geht eine Haltevorrichtung zur Anbringung einer Lichtschranke im Bereich eines Garagentors hervor. Die Haltevorrichtung ist als Haltewinkel ausgebildet und weist einen ersten Schenkel und einen zweiten Schenkel auf. An dem ersten Schenkel ist eine Lichtschrankenbefestigungseinrichtung angeordnet. An dem zweiten Schenkel sind eine Torbefestigungseinrichtung umfassend einen Flansch und eine Klammer und eine Boden- oder Wandbefestigungseinrichtung angeordnet.

Zudem geht aus der US 6,662,499 B1 eine Haltevorrichtung zum Befestigen einer Lichtschranke im Bereich eines Garagentors hervor. Die Haltevorrichtung weist zwei Haltewinkel auf, die jeweils einen ersten Schenkel und einen zweiten Schenkel umfassen. Die ersten Schenkel der Haltewinkel weisen jeweils eine Lichtschrankenbefestigungseinrichtung und eine Boden- oder Wandbefestigungseinrichtung auf und die zweiten Schenkel sind mit einem Langloch versehen. Beide Haltewinkel sind miteinander über die Langlöcher und einem Befestigungsmittel zu der Haltevorrichtung verbunden.

Darüber hinaus geht aus der US 2002/0105430 A1 eine Haltevorrichtung zur Anbringung einer Lichtschranke an einem Garagentor hervor. Die Haltevorrichtung ist derart gestaltet, dass sie selbstausrichtend ist. Hierzu weist die Haltevorrichtung zwei Haltewinkel auf, die beide über eine flexibles Element miteinander verbunden sind. Beide Haltewinkel weisen einen ersten und zweiten Schenkel auf, wobei an ihren ersten Schenkel jeweils eine Tor- oder Wandbefestigungseinrichtung und eine Lichtschrankenbefestigungseinrichtung angeordnet sind.

Außer solchen mitfahrenden Lichtschrankensystemen sind auch Lichtschranken zur Überwachung von Toren bekannt, deren Lichtschrankenelemente stationär im Bereich der Toröffnung befestigt sind. Die Lichtschrankenelemente sind dann in der Regel im unteren Bereich der Toröffnung derart anzubringen, dass sie möglichst die gesamte Breite der Toreinfahrt erfassen und auch möglichst nahe an dem oder in dem Torweg angeordnet sind, um ein hier stehendes Hindernis sicher zu erfassen. Nun haben die meisten Tore ein feststehendes Torelement, insbesondere einen Torpfosten oder einen feststehenden Torrahmen, und einen daran oder darin geführten Torflügel, oft in Form eines Torblattes. Die Art und die Konstruktion des feststehenden Torelements, insbesondere des Torrahmens - im folgenden Zarge genannt -, sowie des Torflügels bzw. Torblattes sind je nach Konstruktion des Tores und je nach Typ des Tores unterschiedlich. Es gibt ganz unterschiedliche Tortypen wie Hubtore, Kipptore, Schwingtore, Canopytore, Einblatt-Überkof-Tore, Sektionaltore, Rolltore, Drehtore, Drehflügeltore, Seitensektionaltore, Falttore und Schiebetore; und unter diesen unterschiedlichen Torbauarten gibt es noch unterschiedliche Ausführungen. Um die genannte Anordnung der Lichtschrankenelemente zu ermöglichen, ist jeweils eine an die gegebene Einbausituation angepasste Halterung erforderlich. Ein hoher Preis, der durch bisher notwendige Einzelanpassungen bedingt ist, steht bisher einer breiten Verbreitung der bisher bekannten Lichtschrankensysteme entgegen.

Ein den Preis eines Torantriebssystems erheblich beeinflussender Faktor ist auch die Montagezeit des Torantriebssystems. Da eine Lichtschranke bisher einen erheblichen Mehraufwand für die Montage bedeutet, sind die meisten Torantriebssysteme bisher nicht mit einer Lichtschranke ausgestattet oder können nur auf besonderen Wunsch unter entsprechender Bezahlung zusätzlich mit einer Lichtschanke ausgestattet werden.

Grundsätzliche Aufgabe der Erfindung ist es, ein Lichtschrankensystem zur Überwachung eines Torantriebs bzw. eines damit angetriebenen Tores derart auszugestalten, dass es an unterschiedlichen Tortypen und/oder Torausführungen möglichst einfach montierbar ist.

Diese Aufgabe wird durch eine Haltevorrichtung für ein solches Lichtschrankensystem mit den Merkmalen des Anspruches 1 sowie eine damit versehene Lichtschrankenvorrichtung gemäß Anspruch 12 gelöst.

Ein damit versehener Torantrieb sowie ein damit versehenes Tor, insbesondere in Form eines Gliedertores oder eines Einblatt-Überkopf-Tores, sowie ein verschiedene Tortypen und Torausführungen zur Auswahl aufweisendes Torsystem sind Gegenstände der weiteren Nebenansprüche.

Vorteilhafte Ausgestaltungen der Erfindung sind in den Unteransprüchen wiedergegeben.

Die erfindungsgemäße Haltevorrichtung hat demnach eine Lichtschrankenbefestigungseinrichtung, mit welcher ein Lichtschrankenelement - also zum Beispiel der Sender oder der Empfänger oder ein Sendeempfänger oder ein Reflektor - an der Haltevorrichtung befestigbar ist. Die Haltevorrichtung weist weiter wenigstens eine Torbefestigungseinrichtung zum Befestigen der Halteeinrichtung an einem Element eines Tores auf. Gemäß einem Aspekt der Erfindung sind nun wenigstens zwei solcher Torbefestigungseinrichtungen vorgesehen, die zur Befestigung an unterschiedliche Elemente unterschiedlicher Tortypen oder Torausführungen angepasst sind, oder es ist gemäß einem anderen Aspekt der Erfindung neben einer Torbefestigungseinrichtung, die zum Befestigen der Haltevorrichtung an dem Element eines Tores angepasst ist, noch eine Boden- oder Wandbefestigungseinrichtung vorgesehen, mittels welcher die Halteeinrichtung an dem Boden oder einer im Bereich der Toröffnung vorhandenen Wandung (diese kann auch an einem Torpfosten vorhanden sein) befestigbar ist. In einer besonders bevorzugten Ausgestaltung der Erfindung sind sowohl wenigstens zwei unterschiedliche Torbefestigungseinrichtungen zur Befestigung an zwei unterschiedlichen Tortypen als auch eine Boden- oder Wandbefestigungseinrichtung zur Befestigung an dem Boden bzw. einer Wand vorgesehen.

Der Monteur vor Ort kann demnach je nach Gegebenheit am Montageort zwischen wenigstens zwei Befestigungsmöglichkeiten wählen. Es kann zum Beispiel eine erste Torbefestigungseinrichtung vorgesehen sein, die zur Befestigung an der Zarge eines Gliedertores, zum Beispiel eines Sektionaltores, ausgebildet ist, und eine zweite Torbefestigungseinrichtung, die zur Befestigung an der Zarge eines Einblatt-Überkopftores, wie insbesondere Schwingtor, ausgebildet ist.

Dadurch lässt sich der Montageaufwand verringern, da man durch spezielle Anpassungen an der Halterung und/oder an dem Tor Positionierhilfen vorsehen kann, die auch den ungelernten Monteur zur richtigen Montage hinführen. Und es lässt sich der Aufwand zur Anpassung an die Gegebenheiten vor Ort reduzieren, da eine Haltevorrichtung zu mehreren Tortypen oder mehreren unterschiedlichen Torelementen verschiedener Torausführungen passt. Es können Montageteile eingespart werden, und die Notwendigkeit der Auswahl passender Montageteile aus einer Vielzahl mitgelieferter oder zu bestellender möglicher Montageteile entfällt.

Viele Torantriebe auf dem Markt sind bereits für den wahlweisen Antrieb von verschiedenen Tortypen, wie den wahlweisen Antrieb von Sektionaltoren oder von Schwingtoren, ausgebildet. Mit einer entsprechenden Haltevorrichtung lässt sich dann dem Torantrieb einfach eine Lichtschranke zuordnen, die genauso universal wie der Torantrieb einsetzbar ist.

Zusätzlich oder alternativ zu der zweiten Torbefestigungseinrichtung kann dann noch die Boden- und/oder Wandbefestigungseinrichtung vorgesehen sein, die insbesondere dann zum Einsatz kommt, wenn kein zu einer der Torbefestigungseinrichtungen passendes Torelement vorhanden ist. Zum Beispiel kann anstelle der Anordnung einer Torzarge dann eine Befestigung am Boden oder der Wand in unmittelbarer Nähe zu der Torzarge erfolgen. Die Haltevorrichtung kann dann beispielsweise auch Drehtorantrieben zugeordnet werden, wo eine Lichtschrankenüberwachung weiter vor oder hinter der eigentlichen Toreinfahrt vorteilhaft ist, wo keine Torzarge oder dergleichen zur Montage zur Verfügung steht.

Die verschiedenen Befestigungsmöglichkeiten der Haltevorrichtung lassen sich besonders einfach realisieren, wenn die Haltevorrichtung als Haltewinkel mit einem ersten Schenkel und einem zweiten Schenkel ausgebildet ist. Die beiden Schenkel verlaufen dabei vorzugsweise etwa rechtwinklig zueinander. So kann die Haltevorrichtung als Haltewinkel für eine Bodenbefestigung oder für eine Befestigung an einer Frontseite oder Rückseite einer Zarge oder dergleichen verwendet werden. Wenn der erste Schenkel länger als der zweite Schenkel ausgebildet ist, kann dieser erste Schenkel zum einen für die Befestigung des Lichtschrankenelementes in mehr oder weniger großem Abstand von dem zweiten Schenkel verwendet werden. Zum anderen kann dieser erste Schenkel als einfaches Halteblech derart verwendet werden, dass sowohl die Torbefestigung als auch die Befestigung des Lichtschrankenelements an diesem ersten Haltewinkel erfolgt.

Der erste Schenkel ist gekröpft ausgebildet. Die Kröpfung ist insbesondere dazu geeignet, als Anschlagbereich zum Festlegen der Haltevorrichtung an einem entsprechend geformten Wandbereich einer Torzarge zu dienen, so dass gleich die Orientierung der Haltevorrichtung eindeutig festgelegt werden kann.

Zum anderen kann die Kröpfung zu einer vorteilhaften Positionierung des Lichtschrankenelements je nach zu verwendender Tor- bzw. Bodenbefestigungseinrichtung eingesetzt werden. Bei entsprechender Orientierung der Kröpfung derart, dass der Haltewinkel in Seitenansicht etwa wie ein Fragezeichen ausgeformt ist, lässt sich der zweite Schenkel trotz ausreichender Größe für eine vorteilhafte Bodenbefestigung derart bemessen, dass er nicht über ein Lichtschrankengehäuse vortritt, wenn dieses an einem vorversetzten zweiten, freien Endbereich des ersten Schenkels befestigt ist.

Um die Haltevorrichtung noch universeller einsetzen zu können, sind vorzugsweise mehrere Lichtschrankenbefestigungseinrichtungen vorgesehen, die je nach gegebener Einbausituation wahlweise verwendet werden können. So kann ein Lichtschrankenelement in unterschiedlichen Abständen von Torelementen und/oder in unterschiedlichen Abständen zum Boden befestigt werden. Oder es ist möglich, das Lichtschrankenelement in unterschiedlichen Orientierungen zum Torelement und/oder zum Boden zu befestigen.

Vorzugsweise weist der längere erste Schenkel wenigstens zwei Lichtschrankenbefestigungseinrichtungen auf. Somit können mit dem gleichen Haltewinkel zwei verschiedene Höhen des Lichtstrahles über dem Boden bei Bodenbefestigung oder zwei verschiedene Abstände des Lichtstrahls von dem Torelement bei entsprechender Befestigung an dem Torelement je nach Wunsch ausgewählt werden.

Für eine solche Auswahl sind bevorzugt zwei Lichtschrankenbefestigungseinrichtungen auf dem vorversetzten zweiten Bereich, dem freien Endbereich des zweiten Schenkels, angeordnet. Zusätzlich oder alternativ kann noch eine weitere Lichtschrankenbefestigungseinrichtung auf dem zurückversetzten ersten Bereich angeordnet sein. Diese dritte Lichtschrankenbefestigungseinrichtung kann bei Verwendung des ersten Schenkels als einfache Halteplatte (der zweite Schenkel wird nicht zur Befestigung verwendet) zur Lichtschrankenbefestigung eingesetzt werden.

Vorzugsweise ist aber auch oder alternativ auf dem zweiten Schenkel eine weitere Lichtschrankenbefestigungseinrichtung vorgesehen, um die Einsatzmöglichkeiten des Haltewinkels weiter zu erhöhen und eine weitere mögliche Orientierung des befestigten Lichtschrankenelements zur Verfügung zu stellen.

Die wenigstens eine Lichtschrankenbefestigungseinrichtung, vorzugsweise alle von mehreren Lichtschrankenbefestigungseinrichtungen, ist bzw. sind weiter bevorzugt derart ausgebildet, dass das Lichtschrankengehäuse nur in vorbestimmten Orientierungen befestigbar ist, um dem Monteur gleich die passende Montageposition zur Verfügung zu stellen. Dies kann in besonders einfacher Form durch eine unrunde Öffnung geschehen, die mit einem entsprechenden Vorsprung an dem Lichtschrankenelement erfassbar sind, so dass je nach Symmetrie der Öffnung nur eine, zwei oder mehrere Orientierungen möglich sind. Besonders bevorzugt ist eine quadratische Öffnung, die insgesamt vier Orientierungen eines entsprechenden quadratischen Vorsprunges ermöglicht. Weiter vorzugsweise ist die jeweilige Öffnung der Lichtschrankenbefestigungseinrichtung auf einer Längsmittellinie der Haltevorrichtung und somit symmetrisch angeordnet. Dadurch lässt sich diese Öffnung in mehreren Orientierungen der Haltevorrichtung einfach verwenden. Selbstverständlich kommt hier genauso die kinematische Umkehrung - Ausnehmung oder Rücksprung an dem Lichtschrankengehäuse und Vorsprung an der Haltevorrichtung - in Betracht. Demnach ist bei einer bevorzugten Ausgestaltung der erfindungsgemäßen Haltevorrichtung vorgesehen, dass die wenigstens eine Lichtschrankenbefestigungseinrichtung (36, 37, 38) wenigstens eine auf einer Längsmittellinie (34) der Haltevorrichtung (10) angeordnete unrunde, insbesondere vieleckig berandete, Öffnung (40) aufweist.

Weiter ist in einer bevorzugten Ausgestaltung der Haltevorrichtung vorgesehen, dass die wenigstens eine Lichtschrankenbefestigungseinrichtung (36, 37, 38) eine Vorsprungsausbildung und/oder eine Rücksprungausbildung (29) aufweist, zur Aufnahme eines Rücksprunges bzw. Vorsprunges (82) an dem Lichtschrankenelement (12; 212; 312) zwecks exakter Positionierung desselben.

Um die Haltevorrichtung sowohl an der linken als auch der rechten Torseite für die Befestigung des einen oder des anderen für die Errichtung der Lichtstrecke notwendigen Lichtschrankenelements verwenden zu können, ist die Haltevorrichtung insgesamt im wesentlichen spiegelsymmetrisch ausgebildet. Davon ausgenommen kann eine an dem zweiten Schenkel vorgesehene Bodenbefestigungseinrichtung sein, da bei einer entsprechenden aufrechten Montage des Haltewinkels eine Symmetrie zu einer Längsmittelebene weniger wichtig ist.

Die Lichtschrankenbefestigungseinrichtung kann entweder die entsprechende vieleckig berandete Öffnung aufweisen und/oder sie kann eine auch zur Torbefestigung einsetzbare andersartig geformte, beispielsweise auch kreissymmetrisch geformte, Öffnung aufweisen und eine Positioniereinrichtung, gegen die das Lichtschrankenelement bei passender Ausrichtung anliegt.

Gemäß einer weiteren vorteilhaften Ausgestaltung der Haltevorrichtung ist vorgesehen, dass die wenigstens eine Lichtschrankenbefestigungseinrichtung (36, 37, 38) derart zur Befestigung eines Lichtschrankengehäuses (68; 268; 368) ausgebildet ist, dass das Lichtschrankengehäuse (68; 268; 368) sowohl in einer im wesentlichen längs zur Erstreckung der Haltevorrichtung (10; 210; 310) gerichteten Orientierung als auch in einer im wesentlichen quer zur Erstreckung der Haltevorrichtung (10; 210; 310) gerichteten Orientierung an der Haltevorrichtung befestigbar ist.

Die wenigstens eine Torbefestigungseinrichtung (42, 43) ist vorzugsweise zur Befestigung der Haltevorrichtung (10; 210; 310) an einer Torzarge (45, 98) ausgebildet ist.

Auch die Torbefestigung wird besonders einfach, wenn man möglichst nur eine einfache Verbindung, wie Rast- oder Schraubverbindung zur Befestigung an einem Torelement, also insbesondere an einer Torzarge, vorsieht. Dementsprechend weist die wenigstens eine Torbefestigungseinrichtung vorzugsweise eine Öffnung für einen Schraubbefestiger auf, mittels welcher die Haltevorrichtung an der Torzarge an einer entsprechend vorgesehenen Schrauböffnung anschraubbar ist. Die Öffnung kann weiter vorzugsweise auch für andere Zwecke, beispielsweise zum Eingriff eines Rastvorsprunges zwecks Klips- oder Rastverbindung genutzt werden. Um bei dieser Montage gleich die passende Orientierung der Lichtschranke vorzusehen, ist weiter vorzugsweise für die Torbefestigung eine Positionierhilfe vorgesehen. Diese ist vorzugsweise durch formschlüssigen Eingriff passender Elemente an der Torzarge und der Haltevorrichtung bestimmt. Vorzugsweise weist hierzu jede der Torbefestigungseinrichtungen der Haltevorrichtung eine passende Anschlageinrichtung zum formschlüssigen und/oder verdrehfesten Erfassen einer Kantenausbildung der Torzarge auf. Diese Anschlageinrichtung kann besonders einfach durch eine von der vorzugsweise aus Blech gebildeten Haltevorrichtung herausgebogene Lasche und/oder durch eine Kröpfung, beispielsweise die oben bereits erwähnte Kröpfung des ersten Schenkels, ausgebildet sein.

Bei besonders bevorzugten Ausgestaltungen von Gliedertoren, nämlich insbesondere hier Sektionaltore, kann an der Torzarge an einer von der Torföffnung weg und nach innen in den zu verschließenden Raum hin gerichteten Kante eine schräg abstehende Kantenausbildung vorgesehen sein. Vorzugsweise ist die Halteeinrichtung derart ausgebildet, dass eine entsprechende Kröpfung bei Schraubbefestigung in eine entsprechende Öffnung an der Torzarge exakt an dieser schrägen Kantenausbildung aufliegt. Für eine weitere exakte Positionierung kann zusätzlich noch eine Hintergreifeinrichtung, insbesondere in Form einer an der Kröpfung parallel hierzu ausgebogenen oder sonst wie angeformten Lasche, vorgesehen sein, die die Kantenausbildung von der anderen Seite aus hintergreift. So kann die Haltevorrichtung einfach auf diese wegstehende Kantenausbildung gesteckt werden und anschließend festgeschraubt werden. Hierdurch ist die Lage der Haltevorrichtung und damit die Lage des Lichtschrankenelements bereits durch die Torzarge exakt vorgegeben und die Montage ist extrem vereinfacht.

Für einen festen passenden Sitz und eine leichte Montage bildet die Hintergreifeinrichtung mit der Kröpfung vorzugsweise eine Öffnungsweite von drei bis vier Millimetern, insbesondere etwa 3,5 Millimeter. Weiter vorzugsweise ist der die Kröpfung bildende schräge Bereich zwischen den beiden parallel versetzt zueinander laufenden Bereichen mit etwa 44° bis 48° insbesondere etwa 46° zu diesen beiden Bereichen geneigt ausgebildet. Dadurch lässt sich eine exakte Anlage dieses schrägen Bereichs an entsprechend ausgebildete Torzargen von Sektionaltoren erreichen. Zueinander passend haben weiter vorzugsweise sowohl die Schraubbefestiger-Öffnung an der Haltevorrichtung als auch eine in der Torzarge zwecks Lichtschrankenbefestigung vorgesehene Schraubbefestiger-Öffnung, eventuell auch eine Gewindeöffnung, von dem schrägen Bereich einen Abstand von etwa 44 bis 48 Millimeter, insbesondere von etwa 46 Millimeter.

Für eine Befestigung der Haltevorrichtung an einer Zarge eines Einblatt-Überkopf-Tores (z.B. Kipptor, Schwingtor, Canopy-Tor) ist weiter vorzugsweise an dem zweiten Schenkel eine möglichst passend zu der Zarge ausgebildete Torbefestigungseinrichtung vorgesehen. Hierzu ist weiter bevorzugt eine Anschlageinrichtung an dem zweiten Schenkel als Positionierhilfe vorgesehen. Diese Anschlageinrichtung ist weiter vorzugsweise von dem zweiten Schenkel abstrebend vorgesehen und steht von dem zweiten Schenkel in der dem ersten Schenkel entgegengesetzten Richtung vor.

An der Torzarge des Einblatt-Überkopftores ist vorzugsweise eine Schraubbefestiger-Öffnung für eine Lichtschrankenbefestigung, eventuell auch eine Gewindeöffnung, in passender Höhe und in einem Abstand von etwa 14 bis 16 mm, insbesondere etwa 15 mm von einer vertikalen Kante vorgesehen. Entsprechend ist die Anschlageinrichtung der Haltevorrichtung vorzugsweise von dem Zentrum der Schraubbefestiger-Öffnung der entsprechenden Torbefestigungseinrichtung mit einem Abstand von etwa 14 bis 16 mm, insbesondere etwa 15 mm angeordnet.

Anstelle eines Schraubbefestigers kann auch ein Klipszwischenstück vorgesehen sein, das mit zwei, zum Beispiel entgegengesetzt gerichteten, Rastvorsprüngen einerseits zum befestigenden und arretierenden Einrasten in die vorzugsweise jeweils gleich gestaltete Schraubbefestiger-Öffnung der verschiedenen Tore und andererseits zum befestigenden und arretierenden Einrasten in die jeweilige Schraubbefestiger-Öffnung einer Torbefestigungseinrichtung ausgebildet ist. Dadurch ist eine werkzeuglose einfache Montage ermöglicht.

Demgemäß ist bei einer bevorzugten Ausgestaltung der Haltevorrichtung vorgesehen, dass die Lichtschrankenbefestigungseinrichtung (36, 37, 38) und/oder wenigstens eine Torbefestigungseinrichtung (42, 43) als Teil einer Klips- oder Rastverbindung ausgebildet ist.

Da an dem Boden oder der Wand des zu verschließenden Raumes herstellerseitig keine solche entsprechenden Positionierhilfen oder Montagehilfen vorgesehen werden können, ist die Boden- oder Wandbefestigungseinrichtung vorzugsweise derart ausgebildet, dass trotz sicherer Befestigung eine leichte Ausrichtung der Lichtschranke erfolgen kann. Hierzu ist bevorzugt, dass die Boden- oder Wandbefestigungseinrichtung eine erste Schraubbefestiger-Öffnung für eine erste Schraube-Dübel-Kombination hat. Davon beabstandet ist eine zweite Schraubbefestiger-Öffnung für eine zweite Schraube-Dübel-Kombination vorgesehen. Während die erste Schraubbefestiger-Öffnung kreisrund für eine exakte Positionierung ausgebildet ist, ist die zweite Schraubbefestiger-Öffnung als gebogenes Langloch vorgesehen, das mit der ersten Schraubbefestiger-Öffnung als Zentrum eine Kreislinie nachbeschreibt. So können auch bei Winkelabweichungen der links und rechts der Toröffnung vorzusehenden vier Bohrungen für die vier Schraubbbefestiger die beiden jeweils mit einer der hier beschriebenen Haltevorrichtungen zu befestigenden Lichtschrankenelemente leicht durch Verdrehung um die jeweils erste Schraube-Dübel-Kombination zueinander ausgerichtet werden.

Es können auch getrennte Befestigungseinrichtungen zur Bodenbefestigung und Wandbefestigungen vorgesehen sein, wobei zusätzlich zu der vorstehend beschriebenen Bodenbefestigungseinrichtung zum Beispiel an einer anderen Stelle der Haltevorrichtung - zum Beispiel an einem anderen Schenkel des Haltewinkels - eine speziell zur Wandbefestigung ausgebildete Wandbefestigungseinrichtung vorgesehen ist. Die Haltevorrichtung kann hierzu auch im wesentlichen U-förmig mit einem Steg und zwei U-Schenkeln ausgebildet sein, um noch mehr Freiheitsgrade, auch für die Befestigung an einer vertikalen Wand, zur Verfügung zu stellen.

Eine erfindungsgemäße, einem Torantrieb zu geordnete Lichtschrankenvorrichtung zeichnet sich durch wenigstens ein Lichtschrankenelement, welches ein zur

Befestigung an der Haltevorrichtung angepasst ausgebildetes Lichtschrankengehäuse aufweist, und wenigstens eine Haltevorrichtung der zuvor beschriebenen Art zur Befestigung dieses Lichtschrankengehäuses auf.

Die Montage wird weiter vereinfacht, wenn das Lichtschrankengehäuse eine Durchgangsöffnung für einen Schraubbefestiger aufweist. Demnach ist bei einer vorteilhaften Ausgestaltung der Lichtschrankenvorrichtung vorgesehen, dass das Lichtschrankengehäuse (68; 368) eine Durchgangsöffnung (74) für einen Schraubbefestiger (76) zwecks Befestigung an der Haltevorrichtung (10; 210; 310) aufweist.

Das Lichtschrankengehäuse und die entsprechenden Lichtschrankenbefestigungseinrichtung sind vorzugsweise derart zueinander passend ausgebildet, dass das Lichtschrankengehäuse nur in wenigen wählbaren Orientierungen an der Haltevorrichtung befestigbar ist. Dadurch wird dem Monteur die jeweils passende Position einfacher vorgegeben. Beispielsweise kann der Monteur nur unter einer, zweien, dreien u.s.w. bis unter maximal acht wählbaren Orientierungen auswählen. Es ist demnach bevorzugt, dass das Lichtschrankengehäuse (68; 268; 368) in eins bis acht, insbesondere in nur eins bis vier wählbaren Orientierungen an einer Lichtschrankenbefestigungseinrichtungen (36, 37, 38) der Haltevorrichtung befestigbar ist.

In besonders vorteilhafter Ausgestaltung erfolgt die Befestigung des Lichtschrankengehäuses an der Haltevorrichtung und/oder die Befestigung der Haltevorrichtung an dem Tor durch eine Klips- oder Rastverbindung, so dass man Schrauben einsparen kann und für die Montage keine Werkzeuge benötigt. Auch hier sind bevorzugt bestimmte Anordnungen, Höhen und/oder Orientierungen durch entsprechende Befestigungselemente und/oder Positionierhilfen an Tor, Haltevorrichtung und/oder Lichtschrankengehäuse vorgegeben. Beispielsweise kann eine Rastzunge mit Rastnase an dem Lichtschrankengehäuse und eine entsprechende Kantenausbildung - sei es am Rand, sei es im Bereich einer Ausnehmung oder Öffnung oder einer Ausdrückung oder eines sonstigen vorstehenden Elements -, die passend zum Hintergreifen durch die Rastzunge ausgebildet ist, an der Haltevorrichtung ausgebildet sein. Eine entsprechende Kantenausbildung kann auch an einem ortsfest anzuordnenden Torelement, also insbesondere an einer Zarge des Tores, ausgebildet sein, so dass das Lichtschrankengehäuse wahlweise unmittelbar an dem ortsfest anzuordnenden Torelement oder mittelbar mittels der Haltevorrichtung befestigbar ist. Auch die Haltevorrichtung kann mit entsprechenden Rasteinrichtungen versehen sein.

Selbstverständlich ist es für die Rastverbindung unerheblich, an welchem der zu verbindenden Elemente eine Rastzunge oder dergleichen Rasteinrichtung vorhanden ist und an welchem eine dadurch hintergreifbare Kantenausbildung.

Auch kann die Rastverbindung ausschließlich zur Befestigung der Haltevorrichtung am Tor dienen, während die Lichtschranke weiterhin geschraubt oder anderweitig befestigt wird, oder ausschließlich zur Befestigung der Lichtschrankenvorrichtung an der Haltevorrichtung dienen, während die Haltevorrichtung weiterhin an das Tor geschraubt oder anderweitig befestigt wird. Vorzugsweise werden für beide Verbindungen - Lichtschrankenvorrichtung/Haltevorrichtung und Haltevorrichtung/Tor - Rast- oder Klickverbindungen eingesetzt.

Bei einer bevorzugten Ausführungsform der Lichtschrankenvorrichtung (14) mit dem wenigstens einen Lichtschrankenelement (12; 212; 312) mit dem Lichtschrankengehäuse (68; 268; 368) und der wenigstens einen Haltevorrichtung (10; 210; 310) gemäß der Erfindung oder einer vorteilhaften Ausgestaltung davon ist vorgesehen, dass das Lichtschrankengehäuse (268; 368) eine Rasteinrichtung (220; 320) zum Hintergreifen einer Ausnehmung (124, 46) oder einer Kantenausbildung (228) an dem Tor oder an der Haltevorrichtung (10; 210; 310) aufweist.

Diese Rasteinrichtung (220) weist weiter bevorzugt mehrere Rastzungen (221) auf, die zum Eingreifen in eine Öffnung (124; 46) am Tor oder an der Haltevorrichtung ausgebildet sind, an voneinander weg gerichteten Seiten jeweils mit wenigstens einer Rastnase (223) ausgebildet sind und zum Einrasten elastisch aufeinander zu bewegbar sind, oder weist gemäß einer anderen bevorzugten Ausgestaltung mehrere Rastzungen (321) auf, die zum Umfassen zweier voneinander weg gerichteter Kanten (228) am Tor oder an der Haltevorrichtung ausgebildet sind, an zueinander gerichteten Seiten jeweils mit wenigstens einer Rastnase (321) ausgebildet sind und zum Einrasten elastisch voneinander weg bewegbar sind.

Vorteilhafte Materialien für die Haltevorrichtung sind Metallblech oder Kunststoff. Beide Materialien sind kostengünstig und für die Massenproduktion gut geeignet. Bei der Ausführung in Metallblech lassen sich die einzelnen Öffnungen oder Ausnehmungen leicht durch Ausstanzen erreichen; und eine Kröpfung ist einfach durch Umbiegen erzielbar. Laschen und Zungen können durch Ausstanzungen erzielt werden. Bei einer Kunststoffausführung lassen sich auch komplizierte Formen in der Großserie durch Spritzguss kostengünstig herstellen. Insbesondere sind im Kunststoff-Spritzguss-Verfahren an der Haltevorrichtung integrierte Rastelemente einfach realisierbar. Äquivalent zur Herstellung in Blech wäre Metall-Druckguss.

Die Lichtschrankenvorrichtung bzw. die Haltevorrichtung ist insbesondere als Beipack zu einem Torantrieb besonders geeignet. Durch die erfindungsgemäße Ausbildung kann man solche Lichtschrankenvorrichtungen mit zwei zueinander passenden Lichtschrankenelementen (z. B. Sender und Empfänger) und zwei der hier beschriebenen Haltevorrichtungen als Beipack zu jedem Torantrieb beifügen, der für verschiedene Tortypen geeignet ist oder auch nur für einen bestimmten Tortyp geeignet ist. Wegen der universellen Verwendbarkeit der Haltevorrichtung kann man diese an den unterschiedlichsten Tortypen, zu welchen der Torantrieb passt, befestigen. Die hierdurch erreichbare Gleichteilestrategie spart erhebliche Herstellungskosten und Handhabungskosten bei der Kommission der Torantriebe. Es wird einfach jedem Torantrieb, egal für welchen Tortyp, die jeweils gleich ausgebildete Lichtschrankenvorrichtung mit zweien der erfindungsgemäßen Haltevorrichtungen beigefügt. Demnach sind die Haltevorrichtungen mit Lichtschrankenelementen Schlepptorantrieben genauso beigefügt wie Wellentorantrieben, Drehtorantrieben oder Schiebetorantrieben.

Die Erfindung betrifft auch eine Kombination aus dem entsprechenden Tor - sei es Gliedertor, wie Sektionaltor oder Rolltor, sei es Einblatt-Überkopf-Tor, sei es ein Drehtor (ein Torflügel ist mit Scharnierbeschlägen an einem Torpfosten oder einer Wand um eine Hochachse drehbar befestigt) oder ein Schiebetor - mit der hier beschriebenen Lichtschrankenvorrichtung. Dabei ist das jeweils ortsfest zu befestigende Torelement, also zum Beispiel die jeweilige Torzarge, jeweils für die passende Befestigung der Haltevorrichtung vorbereitet. Vorzugsweise ist sie mit einer entsprechenden Gewindebohrung für den an der entsprechenden Torbefestigungseinrichtung der Haltevorrichtung ansetzenden Schraubbefestiger versehen.

Demnach betrifft die Erfindung ein Tor mit einem ortsfest zu befestigenden Torelement, insbesondere einer Zarge (45, 98), und einem daran motorisch angetrieben gehaltenem Torflügel, insbesondere einem Torblatt, und einer Lichtschrankenvorrichtung (14) welches dadurch gekennzeichnet ist,
dass ein Lichtschrankenelement (12; 212; 312) der Lichtschrankenvorrichtung (14) mittels einer Haltevorrichtung (10; 210; 310) nach der Erfindung oder einer vorteilhaften Ausgestaltung davon an dem ortsfest zu befestigenden Torelement befestigbar ist.

In bevorzugter Ausgestaltung eines solchen Tores ist vorgesehen, dass das ortsfest zu befestigende Torelement an diskreten Stellen und in bestimmten Höhen mit vorgefertigten Befestigungselementen (124; 130; 100) versehen ist, die zum Erfassen und/oder erfasst Werden durch die oder eine der Torbefestigungseinrichtungen (42, 43) angepasst an diese ausgebildet sind.

### Hierzu ist weiter bevorzugt vorgesehen,

a) dass das ortsfest zu befestigende Torelement beidseits der Toröffnung je mit wenigstens einem der Befestigungselemente (124; 130; 100) derart versehen ist, dass Haltevorrichtungen (10; 210; 310) für Sender und/oder Empfänger der Lichtschrankenvorrichtung (12; 212; 312) in einer zueinander passenden Anordnung und in durch die Befestigungselemente vorbestimmter Höhe befestigbar sind und/oder
b) dass das ortsfest zu befestigende Torelement ebenfalls mit einer Lichtschrankenbefestigungseinrichtung (124; 130) zur unmittelbaren Befestigung des Lichtschrankengehäuses (68; 268; 368) ausgestattet ist, die entsprechend der Lichtschrankenbefestigungseinrichtung (36, 37, 38) der Haltevorrichtung (10; 210; 310) ausgebildet ist und/oder
c) dass das ortsfest zu befestigende Torelement (45) mit vorgefertigten Kabelbefestigungselementen (130; 208) versehen ist, so dass eine Wegführung für ein Anschlusskabel (126) des Lichtschrankenelements (12; 212; 312) an dem ortsfest zu befestigenden Torelement vorgegeben ist.

Die Erfindung betrifft auch ein Torsystem, umfassend
- unterschiedliche Tortypen, wie insbesondere Sektionaltore und Schwingtore oder verschiedene Ausführungen davon, jeweils mit einem zur Lichtschrankenmontage mittels der Haltevorrichtung an diese angepasstem Torelement, insbesondere Zarge,
- die Haltevorrichtung
- eine Lichtschrankenvorrichtung, montierbar mit der Haltevorrichtung und
- einen oder mehrere unterschiedliche Torantriebstypen, geeignet zum Antreiben wenigstens eines der Tortypen und ansteuerbar mittels der Lichtschrankenvorrichtung.

Die Erfindung umfasst außerdem die einzelnen Systemkomponenten für ein solches System jeweils einzeln.

Ausführungsbeispiele der Erfindung werden nachfolgend anhand der beigefügten Zeichnung näher erläutert. Darin zeigt:
- Fig. 1: eine perspektivische Vorderansicht einer Haltevorrichtung für ein Lichtschrankenelement in Form eines Haltewinkels;
- Fig. 2: eine perspektivische Rückansicht des Haltewinkels;
- Fig. 3: eine Unteransicht des Haltewinkels;
- Fig. 4: eine rechte Seitenansicht des Haltewinkels;
- Fig. 5: eine Vorderansicht des Haltewinkels;
- Fig. 6: eine linke Seitenansicht des Haltewinkels;
- Fig. 7: eine Draufsicht auf den Haltewinkel;
- Fig. 8: eine Vorderansicht eines Lichtschrankengehäuses eines Lichtschrankenelements;
- Fig. 9: eine Seitenansicht des Lichtschrankengehäuses;
- Fig. 10: eine Draufsicht auf das Lichtschrankengehäuse;
- Fig. 11: eine perspektivische Ansicht des Lichtschrankengehäuses von vorne, oben und der Seite gesehen;
- Fig. 12: eine perspektivische Ansicht des an dem Haltewinkel in einer ersten Position befestigten Lichtschrankengehäuses, wobei diese erste Position für eine Bodenmontage geeignet ist;
- Fig. 13: eine perspektivische Ansicht einer zweiten für eine Bodenmontage geeigneten Montageposition von Lichtschrankengehäuse und Haltewinkel;
- Fig. 14: eine perspektivische Ansicht einer dritten Montageposition von Lichtschrankengehäuse und Haltevorrichtung, die zur Befestigung an einer Torzarge eines Einblatt-Überkopftores geeignet ist;
- Fig. 15 und 16: Vorderansichten der ersten und zweiten Montageposition;
- Fig. 17: eine Seitenansicht der dritten Montageposition;
- Fig. 18 bis 20: verschiedene Ansichten des an der Torzarge eines Einbatt-Überkopftores mittels der Haltevorrichtung in der Montageposition gemäß den Figuren 14 und 17 befestigten Lichtschrankengehäuses;
- Fig. 21 bis 27: verschiedene Ansichten eines unteren Bereiches einer Torzarge eines Sektionaltores mit einem Lichtschrankenelement, dessen Lichtschrankengehäuse mittels des Haltewinkels gemäß den Fig. 1 bis 7 in einer vierten Montageposition an der Torzarge befestigt ist;
- Fig. 28 und 29: zwei verschiedene Ausführungsformen von Kabelklemmen, mittels welchen Anschlusskabeln des Lichtschrankenelements einfach verlegbar sind;
- Fig. 30: eine perspektivische Explosionsansicht eines unteren Bereichs einer Torzarge eines Einblatt-Überkopftores und eines Lichtschrankenelements in einer weiteren Ausführungsform mit Verkabelungselementen zur Verdeutlichung einer weiteren Möglichkeit der Lichtschrankenbefestigung, die wahlweise unmittelbar an der Torzarge oder an der Haltevorrichtung der voranstehenden Ausführungen erfolgen kann;
- Fig. 31: eine perspektivische Ansicht der Anordnung von Fig. 30 aus einer anderen Richtung im zusammengesetzten Zustand zur Verdeutlichung der hierbei eingesetzten Rastverbindung;
- Fig. 32: die Anordnung der Fig. 30 und 31 von oben gesehen;
- Fig. 33 bis 35: verschiedene Ansichten einer weiteren Ausführungsform eines Lichtschrankenelements, das mittels einer zweiten Ausführungsform einer Haltevorrichtung befestigbar ist; und
- Fig. 36: eine perspektivische Ansicht einer dritten Ausführungsform einer Haltevorrichtung zur Befestigung eines Lichtschrankenelements zusammen mit dem daran befestigten Lichtschrankenelement;
- Fig. 37: die Anordnung von Fig. 36 zusammen mit einer Torzarge eines Einblatt-Überkopf-Tores in perspektivischer Darstellung; und
- Fig. 38: die Anordnung von Fig. 36 befestigt an einer Torzarge eines Gliedertores in Draufsicht.

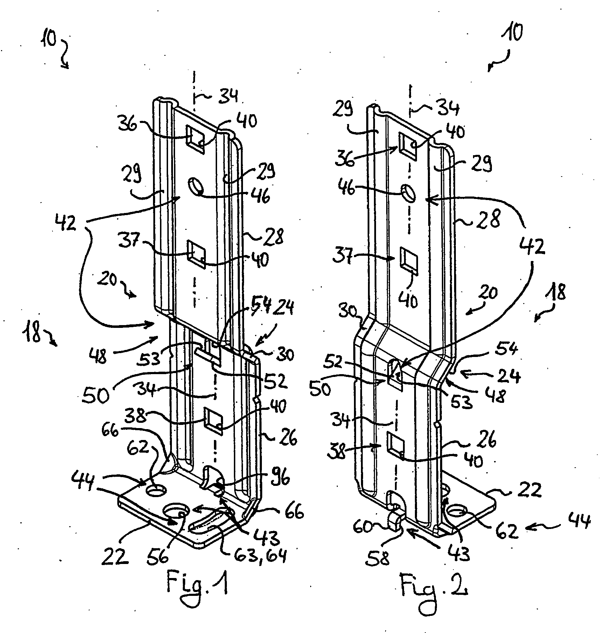

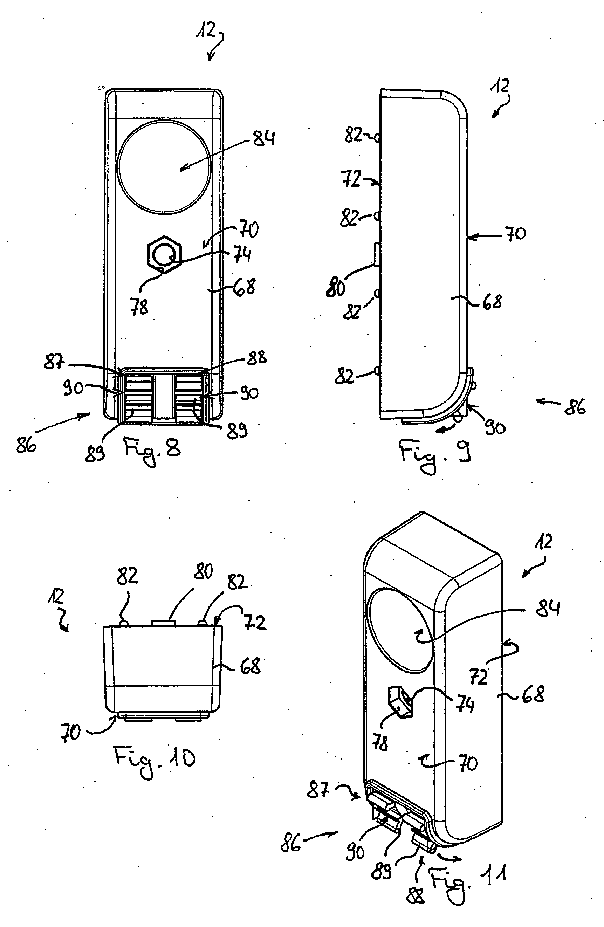

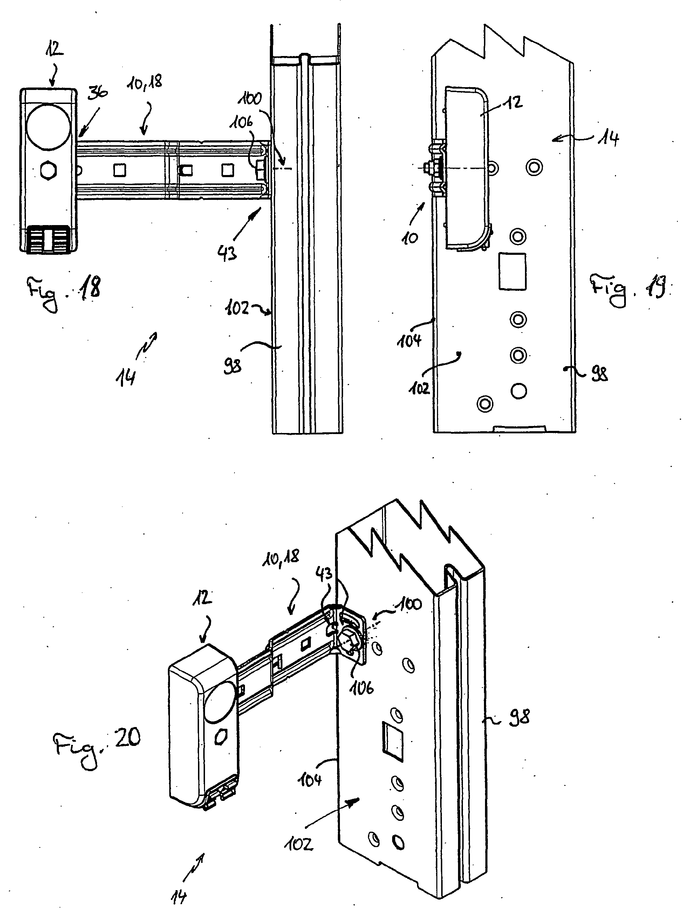

In den Fig. 1 bis 6 ist eine erste Ausführungsform einer Haltevorrichtung 10 für eine erste Ausführungsform eines Lichtschrankenelements 12 (siehe zum Beispiel Fig. 8 bis 11) einer insgesamt mit 14 bezeichneten Lichtschrankenvorrichtung gezeigt. Die Lichtschrankenvorrichtung 14 ist, wie dies in den Fig. 18 bis 27 dargestellt ist, für den Einbau an einem unteren Bereich einer Toröffnung bestimmt, um so einen (nicht dargestellten) Torantrieb anzuhalten und/oder zu reversieren, falls in der Toröffnung ein den Torweg behinderndes Hindernis vorhanden sein sollte.

Die in den Fig. 1 bis 7 allein ohne das Lichtschrankenelement 12 dargestellte Haltevorrichtung 10 ist in Form eines Haltewinkels 18 aus Metall, insbesondere aus Stahlblech, ausgebildet.

Der Haltewinkel 18 hat einen längeren ersten Schenkel 20 sowie einen hierzu im wesentlichen rechtwinklig verlaufenden kürzeren zweiten Schenkel 22. Der erste Schenkel 20 ist mit einer Kröpfung 24 versehen, so dass ein erster Bereich 26 und ein zweiter Bereich 28 im wesentlichen versetzt parallel zueinander ausgerichtet sind. Zwischen dem ersten Bereich 26 und dem zweiten Bereich 28 ist zum Bilden der Kröpfung 24 ein mit einem Winkel α von 46° schräg zu den beiden Bereichen 26, 28 verlaufender schräger Verbindungsbereich 30 vorgesehen.

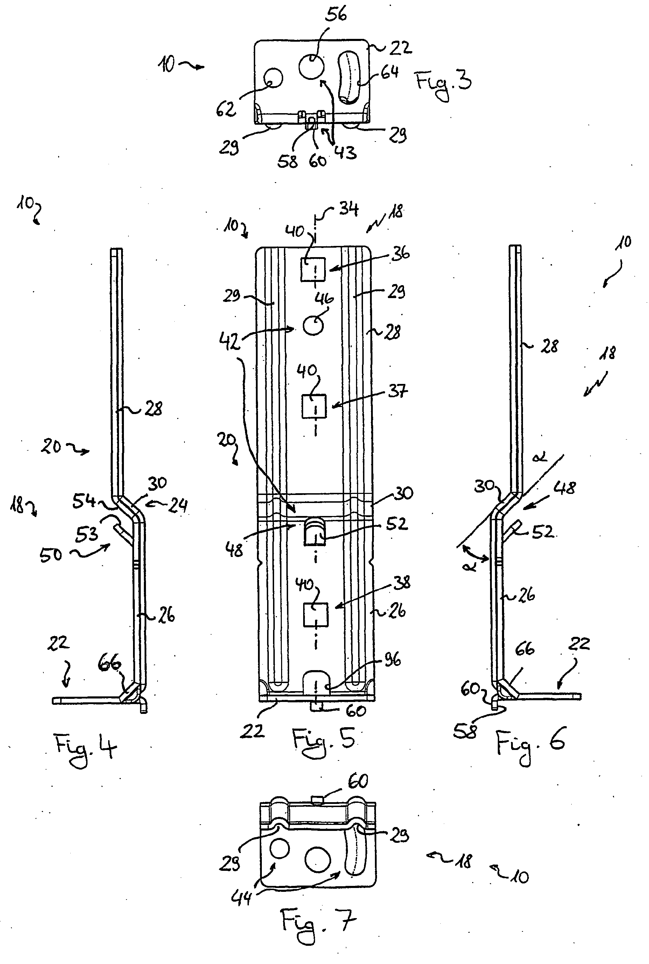

Die Ausrichtung ist derart, dass an dem einen Ende des ersten Bereichs 26 der schräge Verbindungsbereich 30 und daran anschließend der zweite Bereich 28 in die gleiche Richtung vorsteht, wie an dem anderen Ende des ersten Bereichs 26 der zweite Schenkel 22 vorsteht. Dadurch hat der Haltewinkel 18 von der Seite gesehen (siehe zum Beispiel Fig. 4 und 6) in etwa grob die Form eines "?" oder eines Hakens.

Bis auf eine weiter unten noch näher erläuterte Ausnahme einer Boden- oder Wandbefestigungseinrichtung 44 ist der Haltewinkel 18 insgesamt symmetrisch zu seiner Längsmittellinie 34 ausgebildet.

Zentrisch auf der Längsmittellinie 34 finden sich an dem ersten Schenkel 20 insgesamt drei Lichtschrankenbefestigungseinrichtungen 36, 37, 38, welche jeweils eine quadratische Öffnung 40 aufweisen. Dabei ist eine erste Lichtschrankenbefestigungseinrichtung 36 am freien Endbereich des zweiten Bereiches 28 angeordnet. Der zweite Bereich 28 weist weiter auch die zweite Lichtschrankenbefestigungseinrichtung 37 an einem mittleren Abschnitt, näher zur Kröpfung 24 hin verlagert, auf. Die dritte Lichtschrankenbefestigungseinrichtung 38 ist an einem mittleren Abschnitt des ersten Bereichs 26 angeordnet.

Weiter weist der Haltewinkel 18 zwei Torbefestigungseinrichtungen 42 und 43 sowie eine Boden- oder Wandbefestigungseinrichtung 44 auf.

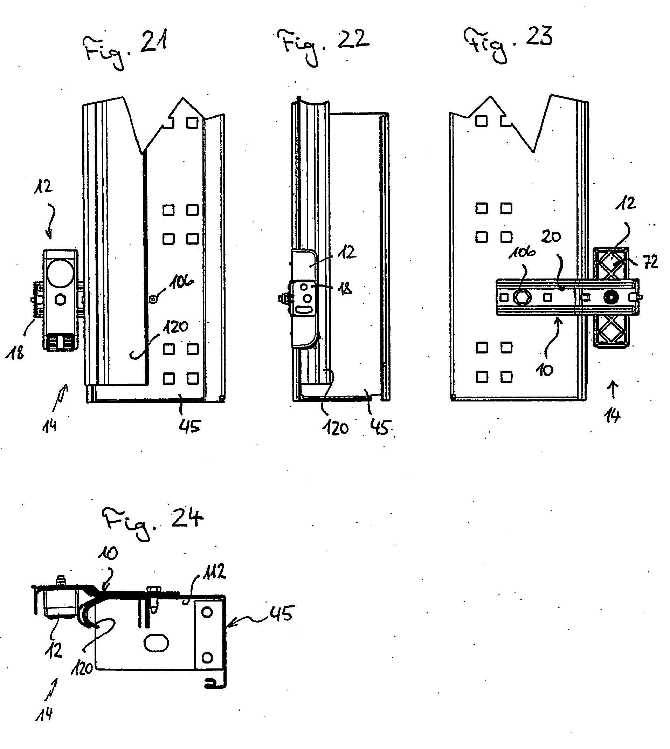

Die erste Torbefestigungseinrichtung 42 ist für eine Befestigung des Haltewinkels 18 an der Torzarge 45 eines Sektionaltores ausgelegt (siehe hierzu näher die Fig. 21 bis 27). Wie aus den Fig. 1 bis 7 ersichtlich ist, weist die erste Torbefestigungseinrichtung 42 eine erste Schraubbefestiger-Öffnung 46 und eine Positionierhilfe, hier in Form einer ersten Anschlageinrichtung 48 auf. Die erste Schraubbefestigeröffnung 46 befindet sich auf der Längsmittellinie 34 ebenfalls nahe des Endbereiches des ersten Schenkels 20, nämlich in dem hier dargestellten Beispiel zwischen der ersten Lichtschrankenbefestigungseinrichtung 36 und der zweiten Lichtschrankenbefestigungseinrichtung 37.

Die erste Anschlageinrichtung 48 weist in dem hier dargestellten Beispiel die nach innen, zu dem zweiten Schenkel 22 gerichtete Innenfläche 54 des schrägen Verbindungsbereiches 30 der Kröpfung 24 sowie eine Hintergreifeinrichtung 50 auf. Die Hinterreifeinrichtung 50 ist in dem hier dargestellten Beispiel durch eine im wesentlichen parallel zu dem schrägen Verbindungsbereich 30 verlaufend herausgebogene Lasche 52 ausgebildet. Zwischen der Innenfläche 53 der Lasche 52 und der Innenfläche 54 des Verbindungsbereiches 30 ist ein Abstand von 3,5 ± 0,1 Millimetern vorgesehen.

Die zweite Torbefestigungseinrichtung 43 ist dem zweiten Schenkel 22 zugeordnet und weist eine ebenfalls zentral zu der durch die Längsmittellinie 34 verlaufenden Längsmittelebene angeordnete zweite Schraubbefestiger-Öffnung 56 sowie eine Positionierhilfe, hier in Form einer zweiten Anschlageinrichtung 58 auf. Wie am besten aus Fig. 2 sowie den Fig. 4 und 6 ersichtlich, weist die zweite Anschlageinrichtung 58 eine rechtwinklig in die entgegengesetzte Richtung wie der erste Schenkel 20 von dem zweiten Schenkel 22 weggebogene zweite Lasche 60 auf.

Auch die Boden- oder Wandbefestigungseinrichtung 44, welche sowohl zur Befestigung des Haltewinkels 18 an dem Boden des durch das zu überwachende Tor zu verschließenden Raumes - oder eines Vorraumes vor der Toröffnung - als auch an der Oberfläche eines Torelements, insbesondere einer Torzarge irgendeines Tortyps, als auch zur Befestigung an einer die Toröffnung umgebenden Wand (nicht dargestellt) verwendbar ist, weist an seitlichen Randbereichen des zweiten Schenkels 22 jeweils eine Schraubbefestiger-Öffnung 62 und 63 auf. Die erste Schraubbefestiger-Öffnung 62 der Boden- oder Wandbefestigungseinrichtung 44 ist etwa auf einer Quermittellinie durch den zweiten Schenkel 22 angeordnet und in Form einer kreisrunden Bohrung ausgebildet. Die zweite Schraubbefestiger-Öffnung 63 der Bodenbefestigungseinrichtung 44 ist in Form eines gebogenen Langloches 64 ausgebildet, welches um das Zentrum der ersten Schraubbefestiger-Öffnung 62 herum kreislinienförmig gebogen ist.

Zur Versteifung der relativen Ausrichtung des ersten Schenkels 20 und des zweiten Schenkels 22 ist an beiden zwischen den beiden Schenkeln 20, 22 ausgebildeten Eckbereichen ein nach innen abgeschrägter Versteifungsbereich 66 vorgesehen.

Weiter sind zur Versteifung der Haltevorrichtung 10 verstärkende Sicken 29 vorgesehen. Diese erstrecken sich, auf der Rückseite des ersten Schenkel vorstehend, entlang der Kantenbereiche des ersten Schenkels 20 und versteifen so beide Bereiche 26 und 28 und die Kröpfung 24.

Für weitere Einzelheiten des Haltewinkels 18 wird ausdrücklich auf die detaillierte, exakte zeichnerische Darstellung Bezug genommen.

Im folgenden wird nun anhand der Darstellung in den Fig. 8 bis 11 das Lichtschrankenelement 12 der Lichtschrankenvorrichtung 14 näher beschrieben.

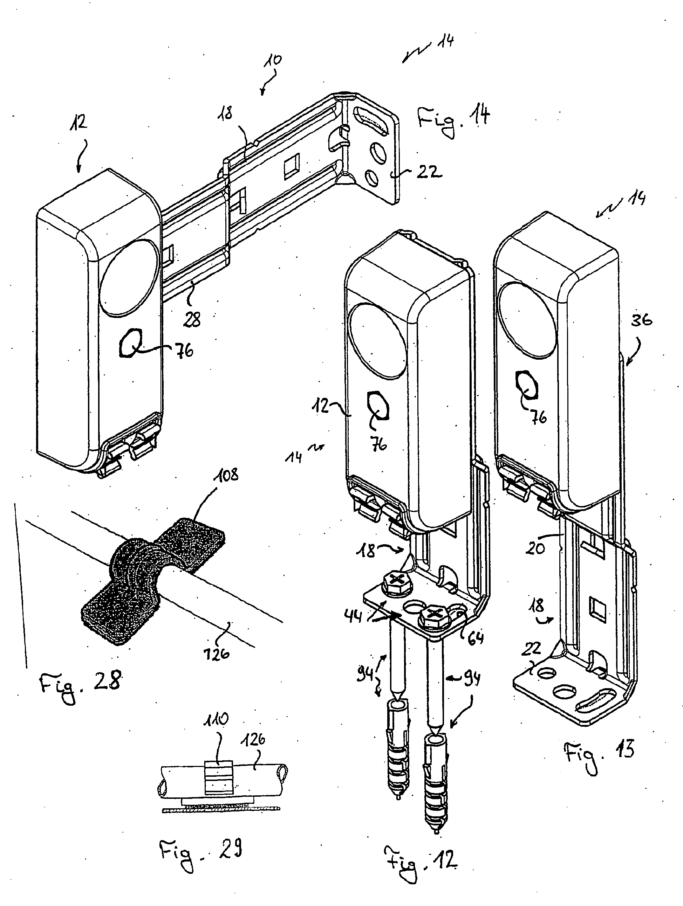

Das Lichtschrankenelement 12 gemäß der ersten Ausführungsform sitzt in einer ersten Ausführungsform eines Lichtschrankengehäuse 68, welches in Vorderansicht eine Rechteckform aufweist. In einem zentralen Bereich ist quer von der Vorderseite 70 bis zur Rückseite 72 durchgängig verlaufend eine Durchgangsöffnung 74 für eine Sechskantschraube 76 (siehe zum Beispiel die Fig. 12 oder 14) vorgesehen.

Wie aus den Fig. 8 - 11 ersichtlich, mündet die Durchgangsöffnung 74 an der Vorderseite 70 in eine Sechskantausnehmung 78 zwecks verdrehfester Aufnahme des Kopfes der Sechskantschraube 76.

An der Rückseite 72 mündet die Durchgangsöffnung 74 in einem quadratischen Vorsprung 80, der von der Rückseite 72 vorsteht und zur exakten Aufnahme in die quadratische Öffnungen 40 der Lichtschrankenbefestigungseinrichtungen 36, 37 oder 38 ausgebildet ist.

Weiter gibt es an der Rückseite 72 insgesamt acht halbkugelförmige Vorsprünge 82, welche bei Parallelausrichtung des Lichtschrankengehäuses 68 zu dem ersten Schenkel 20 in die Verstärkungssicken 29 passend eingreifen. Die Verteilung und Anordnung der Vorsprünge 82 ist dabei derart, dass diejenigen der Vorsprünge 82, die nahe dem quadratischen Vorsprung 80 angeordnet sind, auch bei einer Ausrichtung des Lichtschrankengehäuses 68 quer zu dem ersten Schenkel 20 in die Sicken 29 eingreifen.

Durch die Vorsprung-Rücksprung-Ausbildung zwischen den Vorsprüngen 80, 82 und den Öffnungen bzw. Sicken 40, 29 lässt sich das Lichtschrankengehäuse 68 an der ersten und der zweiten Lichtschrankenbefestigungseinrichtung 36, 37 jeweils in insgesamt vier (und nicht mehr) wählbaren Orientierungen anordnen. Aufgrund der Rückversetzung des ersten Bereiches 26 ist an der an diesem Bereich angeordneten dritten Lichtschrankenbefestigungseinrichtung 38 eine Längsausrichtung von Lichtschrankengehäuse 68 und erstem Schenkel 20 nicht möglich. Hier können nur zwei Orientierungen, des Lichtschrankengehäuse 68 relativ zu dem ersten Schenkel 20 zur Montage ausgewählt werden.

Das Lichtschrankengehäuse 68 ist vorzugsweise aus kostengünstigem, jedoch widerstandsfähigem und belastbarem Kunststoff ausgebildet.

In dem Lichtschrankengehäuse 68 ist zum Bilden des Lichtschrankenelements 12 jeweils ein Sensor der Lichtschrankenvorrichtung vorgesehen. Dies kann ein Lichtsender oder ein Lichtempfänger sein, wobei zur Bildung der Lichtschrankenvorrichtung 14 dann jeweils ein mit einem Sender versehenes Lichtschrankengehäuse 68 an der einen Torseite mittels der Haltevorrichtung 10 zu befestigen ist und ein in dem Lichtschrankengehäuse 68 vorgesehener Empfänger an der anderen Seite der Toröffnung mit der Haltevorrichtung 10 zu befestigen ist.

Weiter kann in dem Lichtschrankengehäuse 68 ein Sende-Empfänger vorgesehen sein, wobei am anderen Torwegende lediglich ein Reflektor angeordnet wird.

Vorzugsweise befindet sich in dem Lichtschrankengehäuse 68 eine Fotodiode 84 mit zugeordneter Elektronik (nicht dargestellt), die je nach Ansteuerung als Sender oder als Empfänger dient.

In dem dargestellten Beispiel ist das Lichtschrankenelement 12 in Zweidrahttechnik ausgeführt, wie dies grundsätzlich bekannt ist. Für nähere Einzelheiten in Bezug auf den inneren Aufbau des Lichtschrankenelementes 12 sowie die Wirkweise der Lichtschrankenvorrichtung 14 sowie deren Verschaltung mit dem nicht näher dargestellten Torantrieb wird auf die DE 20 2004 005 113 U1 verwiesen. Es ist darin insbesondere beschrieben, dass und wie das Lichtschrankenelement 12 mit nur zwei Anschlussleitungen betrieben werden kann und bei etwa gleichem Aufbau je nach Ansteuerung als Sender oder als Empfänger betrieben werden kann.

Für eine einfache Montage der beiden Anschlussleitungen ist an dem Lichtschrankengehäuse 68, hier in einem unteren Bereich der Vorderseite 70 eine Anschlussvorrichtung 86 mit zwei Klemmanschlüssen 87, 88 vorgesehen, wie sie von Lautsprecheranschlüssen von Heimstereoanlagen her bekannt sind. Die beiden Klemmanschlüsse 87, 88 weisen demnach ein durch eine Federspannung in Klemmlage vorgespanntes Kontaktelement oder Klemmelement 89 auf, welches mit einem Fingergriff bzw. einer Fingermulde 90 versehen ist, und so mittels des Fingers aus seiner Klemmlage heraus bewegt werden kann. Dabei öffnet sich ein Kontaktbereich, in den das jeweilige abisolierte Drahtende des Kabels hineingeführt werden kann. Lässt man dann das Klemmelement 89 los, so klemmt die Federvorspannung das abisolierte Drahtende zwischen Metallflächen kontaktierend und festhaltend ein. Derartige Klemmanschlüsse sind als Lautsprecher-Klemmanschlüsse auf dem Elektronik-Markt erhältlich.

In den Fig. 12, 13, 15 und 16 sind verschiedene Montagepositionen für eine Bodenmontage des Lichtschrankenelements 12 dargestellt.

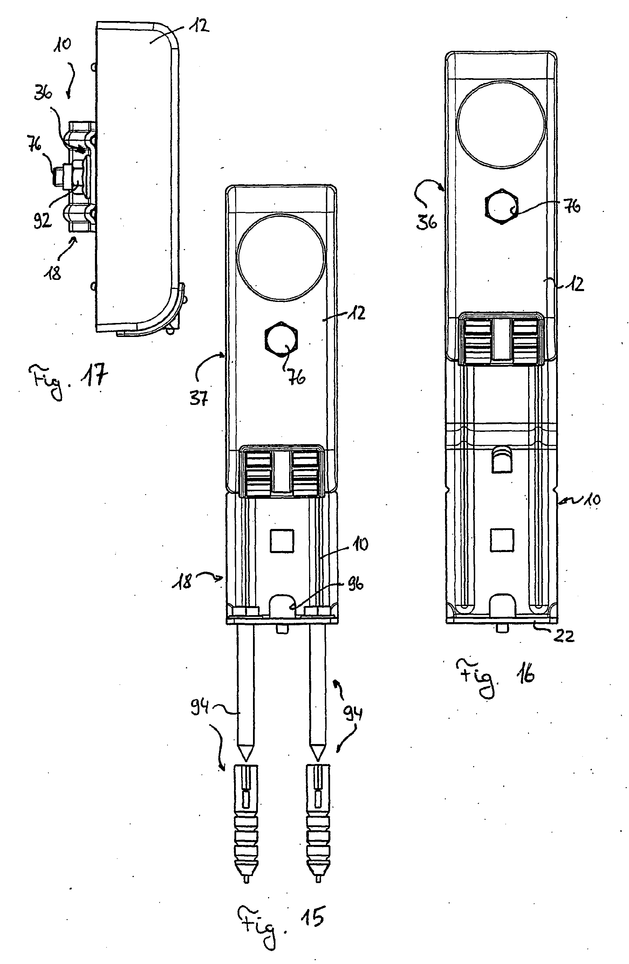

Die Fig. 12 und 15 zeigen dabei eine erste Montageposition, bei der das Lichtschrankengehäuse 68 längs zu dem ersten Schenkel 20 an der zweiten Lichtschrankenbefestigungseinrichtung 37 befestigt ist. Wie insbesondere aus Fig. 12 ersichtlich, schließt dann das Lichtschrankengehäuse 68 oben mit dem ersten Schenkel 20 bündig ab. Das Lichtschrankengehäuse 68 ist einfach mit der in die Durchgangsöffnung 74 eingesetzten Sechskantschraube 76 befestigt, die an der Rückseite mit einer Mutter 92 gesichert ist, wie das in vergleichbarer Weise in Fig. 17 für eine andere Montageposition dargestellt ist.

Wie in den Fig. 12 und 15 gezeigt, sind für die Bodenbefestigung (oder Wandbefestigung) zum Beispiel zwei Schraube-Dübel-Kombinationen 94 vorgesehen, mittels denen der Haltewinkel 18 an der Boden- oder Wandbefestigungseinrichtung 44 angreifend in zwei entsprechend in den Boden gebohrten Löchern sicher befestigt werden kann. Die nach unten vorstehende zweite Lasche 60 kann bei dieser Bodenmontage aufgrund einer darüber befindlichen größeren Ausnehmung 96 in dem ersten Schenkel 20 ohne weiteres nach oben ausweichen, so dass der zweite Schenkel 22 bündig und eben auf dem Boden aufliegen kann und so eine exakte vertikale Orientierung des Lichtschrankenelementes 12 sicherstellen kann.

Die Ausrichtung des durch die Fotodiode 84 auszusendenden oder zu empfangenden Lichtstrahles kann wegen des gebogenen Langloches 64 durch Verdrehung des Haltewinkels 18 um die erste Schraubbefestiger-Öffnung 62 bei eingesetzten Schraube-Dübelkombinationen 94 erfolgen.

In den Fig. 13 und 16 ist eine zweite Montageposition dargestellt, welche mit der ersten Montageposition gemäß den Fig. 12 und 15 vergleichbar ist, wobei jedoch das Lichtschrankengehäuse 68 an der ersten Lichtschrankenbefestigungseinrichtung 36 befestigt ist und somit höher positioniert ist, als bei der ersten Montageposition.

Auch bei einer in den Fig. 14 und 17 gezeigten dritten Montageposition ist das Lichtschrankengehäuse 68 an der ersten Lichtschrankenbefestigungseinrichtung 36 befestigt, jedoch diesmal quer zur Erstreckung des ersten Schenkels 20. Auf diese Weise kann der Haltewinkel 18 zur Befestigung an einer vertikalen, etwa parallel zur Toröffnungsebene verlaufenden Fläche, beispielsweise einer Wandung oder insbesondere an einer Torzarge befestigt werden. Je nach gewünschtem oder erforderlichem Abstand der Lichtschranke von dem Befestigungsort kann bei dieser Querbefestigung, wie dargestellt, die erste Lichtschrankenbefestigungseinrichtung 36 oder wahlweise auch eine der anderen beiden Lichtschrankenbefestigungseinrichtungen 37, 38 verwendet werden. Bei entsprechender Benutzung der Boden- oder Wandbefestigungseinrichtung 44 kann der zweite Schenkel 22 mittels zweier Schrauben an zwei durch den Lichtschrankenmonteur gebohrten Löchern angebracht werden. So kann der Haltewinkel 18 an eine beliebige Wandung oder eine beliebige Torzarge befestigt werden. Bei Befestigung an einer Wandung kann durch den durch den Haltewinkel erreichbaren Abstand sichergestellt werden, dass die Lichtschranke an eventuelle vorstehenden Torteilen - zum Beispiel Torzarge oder Gewichtsausgleichseinrichtungen - vorbei "schaut".

In der gleichen Montagestellung kann man aber auch die zweite Torbefestigungseinrichtung 43 zur Befestigung an einer passenden Torzarge 98 eines Schwingtores oder dergleichen verwenden, wie dies im folgenden anhand der Fig. 18 bis 20 näher erläutert wird.

Die Fig. 18 bis 19 zeigen den unteren Bereich einer Torzarge 98, für ein Einblatt-Überkopftor- wie es beispielsweise aus der DE 101 53 366 A1, der DE 298 155 07 U1, der DE 298 15 487 U1, der DE 100 05 745 C2 oder der DE 101 50 000 B4 sowie aus der Firmendruckschrift "Berry-Schwingtor" der Fa. Hörmann KG mit dem Druckvermerk 12.04 HF 85187/G.50 bekannt ist. Es wird ausdrücklich für weitere Einzelheiten zu solchen Schwingtoren bzw. sonstigen Einblatt-Überkopf-Toren auf diese Druckschriften verwiesen.

Die in den Fig. 18 - 20 dargestellte Torzarge 98 unterscheidet sich von den Torzargen dieser bekannten Einblatt-Überkopftore insbesondere durch eine spezielle Schrauböffnung 100, welche an einer in den zu verschließenden Raum hineingerichteten Wandung 102 der Torzarge 98 in einer für eine Lichtschrankenmontage geeigneten Höhe über dem Boden mit einem an die zweite Torbefestigungseinrichtung 43 angepassten Abstand von einer von der zu verschließenden Toröffnung abgewandten Kante 104 der Torzarge 98 werkseitig angebracht ist. Dieser Abstand der an der inneren Wandung 102 der Torzarge 98 angebrachten Schrauböffnung 100 von der Kante 104 entspricht somit dem Abstand der zweiten Anschlageinrichtung 58 von der zweiten Schraubbefestiger-Öffnung 56 und beträgt in unserem Beispiel zwischen 10 und 20 mm, insbesondere etwa 15 mm. Die Schrauböffnung 100 kann bereits mit Gewinde für eine entsprechende Gewindeschraube vorgefertigt sein, vorzugsweise ist der Haltevorrichtung 10 gemäß der ersten Ausführungsform aber eine Gewinde schneidende oder Gewinde furchende Schraube 106 (z. B. Blechschraube) für die Montage an der Torzarge 98 oder für die später noch zu erläuternde Montage an der Torzarge 45 eines Sektionaltores beigefügt.

Zur Montage des Lichtschrankenelementes 12 an der Torzarge 98 des Schwingtores wird derart vorgegangen, dass der Haltewinkel 18 durch Anlegen der zweiten Anschlageinrichtung 58 an die Kante 104 passend derart positioniert wird, dass die zweite Schraubbefestiger-Öffnung 56 mit der Schrauböffnung 100 fluchtet, anschließend wird der Haltewinkel 18 mit der Schraube 106 fest an der Torzarge 98 befestigt. Das Lichtschrankengehäuse 68 wird - vorher oder nachher - mittels der Sechskantschraube 76 und der Mutter 92 in der in den Fig. 18 bis 20 dargestellten Lage befestigt. Anschließend muss nur noch das zweilitzige Kabel 126 (Fig. 28 und 29) an der Anschlusseinrichtung 86 mittels den Klemmanschlüssen 87 und 88 angeschlossen werden. Das andere Ende des zweilitzigen Kabels 126 wird mit der (nicht dargestellten) Torantriebssteuerung verbunden. Das Kabel 126 kann mittels selbstklebender Kabelklemmen 108 und 110 (siehe die Fig. 28 oder 29) sauber in seinem Verlauf fixiert werden. Diese Kabelklemmen 108 oder 110 können der Haltevorrichtung 10 in ausreichender Anzahl beigepackt sein.

In den Fig. 21 bis 27 ist noch die Montage des Lichtschrankenelements12 mittels der Haltevorrichtung 10 an der Torzarge 45 für ein Sektionaltor dargestellt.

Bei dieser Montage dient der erste Schenkel 20 sowohl zur Torbefestigung als auch zur Befestigung des Lichtschrankenelements 12. Das Lichtschrankengehäuse 68 ist hier in Querausrichtung an der dritten Lichtschrankenbefestigungseinrichtung 38 mittels der Sechskantschraube 76 sowie der Mutter 92 befestigt. Der zweite Schenkel 22 wird nicht zur Befestigung benötigt, kann aber Schutzfunktionen für das Gehäuse 68 gegen Stöße von der Seite erfüllen.

Für die Befestigung der Haltevorrichtung 10 an der Torzarge 45 dient die erste Torbefestigungseinrichtung 42. Das hier nicht näher dargestellte Sektionaltor ist im übrigen insbesondere von der Art, wie es aus der Firmendruckschrift "Garagen-Sektionaltore" der Fa. Hörmann KG mit dem Druckvermerk S.09.05/D.09.05/HF85184/G100 (d.h. gedruckt im September 2005 und unmittelbar danach, unter anderem über das Internet, verteilt) bekannt ist. Es wird für weitere Einzelheiten ausdrücklich auf diese Firmendruckschrift verwiesen.

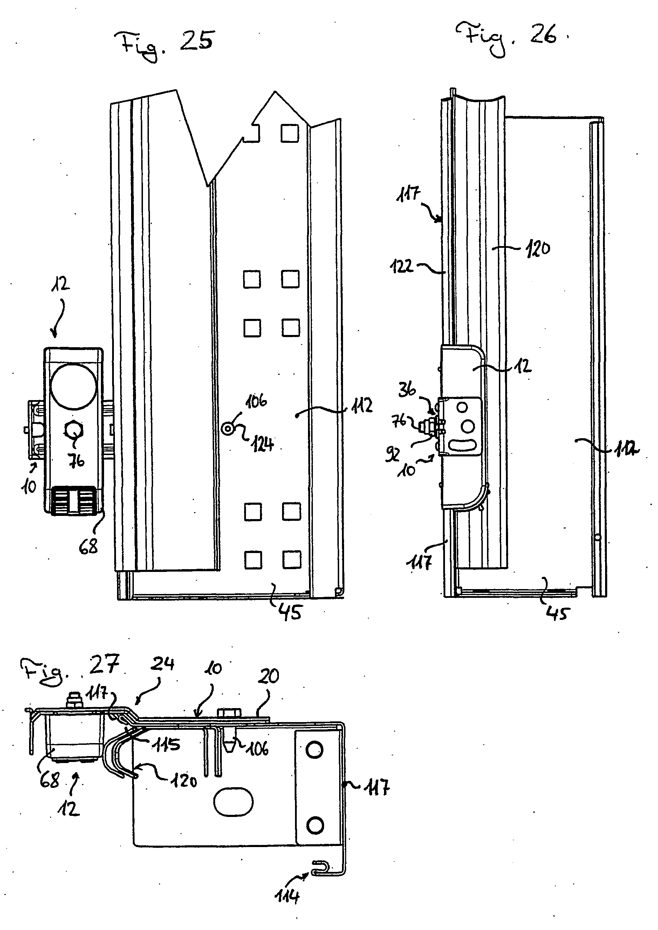

Wie insbesondere der Fig. 27 entnehmbar, weist die hier dargestellte neue Torzarge 45 im Querschnitt gesehen eine etwa L-profilförmig ausgebildete Wandung 112 auf, welche an ihren beiden Endkanten durch Rückfaltungen 114, 115 verstärkt ist. Die mit der Rückfaltung 115 versehene Endkante 117, welche in den zu verschließenden Raum hineingerichtet ist, ist in dem hier dargestellten Beispiel außerdem in einem Winkel von 44 - 46° schräg weg von der zu verschließenden Toröffnung geneigt abstrebend ausgebildet. An dem dieser Endkante 117 benachbarten Innenbereich der L-Profil-Wandung 112 sind Laufschienen 120 für die Führung der Paneele des Sektionaltorblattes vorgesehen. Im Nahbereich dieser Laufschienen 120 ist die L-Profil-Wandung 112 in einer für die Lichtschrankenmontage passenden Höhe mit einer vorbereiteten Schrauböffnung in Form einer kreisrunden Bohrung 124 versehen. Der Abstand der Bohrung 124 von der eine Kantenausbildung 122 bildenden schrägen Endkante 117 ist dabei derart gewählt, dass bei Eingriff dieser Kantenausbildung 122 zwischen der Hintergreifeinrichtung 50 und der Kröpfung 24 die Schrauböffnung 124 mit der ersten Schraubbefestiger-Öfinung 46 des Haltewinkels 80 fluchtet. In dem dargestellten Beispiel beträgt der Abstand zwischen der Wurzel der Kantenausbildung 122 und der Bohrung 124 genauso viel wie der Abstand von dem der Kröpfung 24 zugewandten Ende des zweiten Bereichs 28 bis zum Zentrum der ersten Schraubbefestiger-Öffnung 46, nämlich etwa 46 mm.

Auf diese Weise kann man die Haltevorrichtung 10 einfach mit der ersten Anschlageinrichtung 48, welche durch die Hintergreifeinrichtung und die Kröpfung 24 gebildet wird, auf die Kantenausbildung 122 stecken und anschließend mit der Gewinde schneidenden Schraube 106 fixieren. Dadurch ist eine sehr einfache Montage des Lichtschrankenelements in genau vorgegebener Lage an der Torzarge 45 ermöglicht. Der Abstand zwischen der Hintergreifeinrichtung 50 und der Kröpfung 24 kann dabei derart gewählt werden, dass ein Klemmsitz auf der Kantenausbildung 122 entsteht, so dass man den Haltewinkel 18beim Anschrauben noch nicht einmal festhalten muss.

Auch bei der Montage an der Sektionaltor-Zarge 45 kann der Anschluss des zweilitzigen Kabels 126 wieder einfach mittels der Klemmanschlüsse 87 und 88 erfolgen, wobei die Verlegung des Kabels 126 bis zur Torantriebssteuerung wiederum mittels der selbstklebenden Kabelklemmen 108 oder 110 erfolgen kann.

Die Lichtschrankenvorrichtung 14 ist in dem dargestellten Beispiel insbesondere als Beipack zu verschiedenen Torantrieben, welche sowohl Sektionaltore als auch Schwingtore antreiben können, geeignet. Ein solcher Beipack umfasst zwei zum Bilden einer Lichtschranke zueinander passende Lichtschrankenelemente 12, sowie zwei der Haltevorrichtungen 10, sowie die verschiedenen Befestiger 76, 92, 94, 106, eine für verschiedene Einbausituationen ausreichend bemessene Länge des zweilitzigen Kabels 126 derart, dass beide Lichtschrankenelemente 12 angeschlossen werden können, sowie eine Vielzahl der selbstklebenden Kabelklemmen 108 bzw. 110.

Neben der dargestellten Montage des Lichtschrankengehäuses 68 mittels der Haltevorrichtung 10 ist es aufgrund der Durchgangsöffnung 74 auch möglich, das Lichtschrankengehäuse 68 zum Beispiel unmittelbar an eine Wand zu montieren, zum Beispiel an eine quer zur Toröffnungsebene verlaufende Wandung, beispielsweise im Laibungsbereich der Toröffnung.

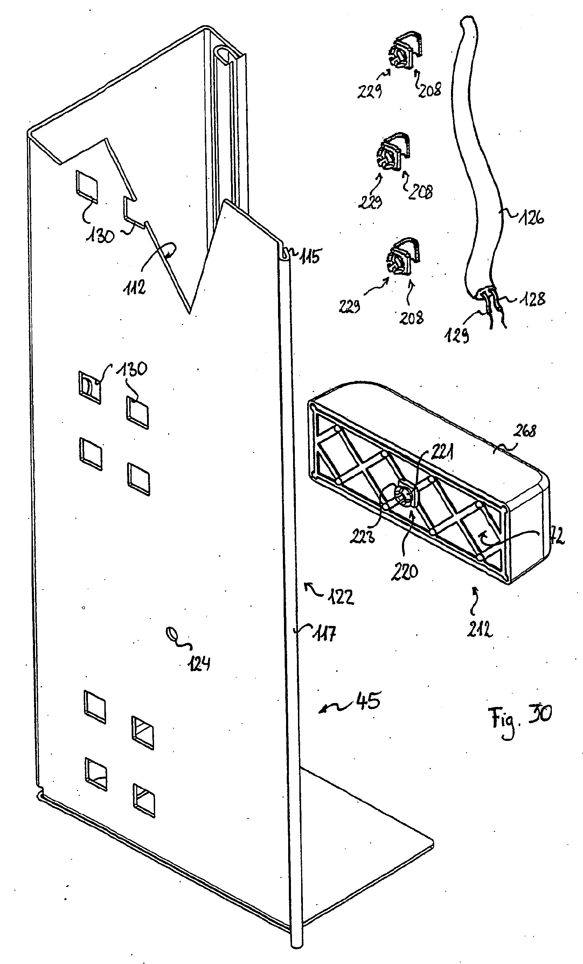

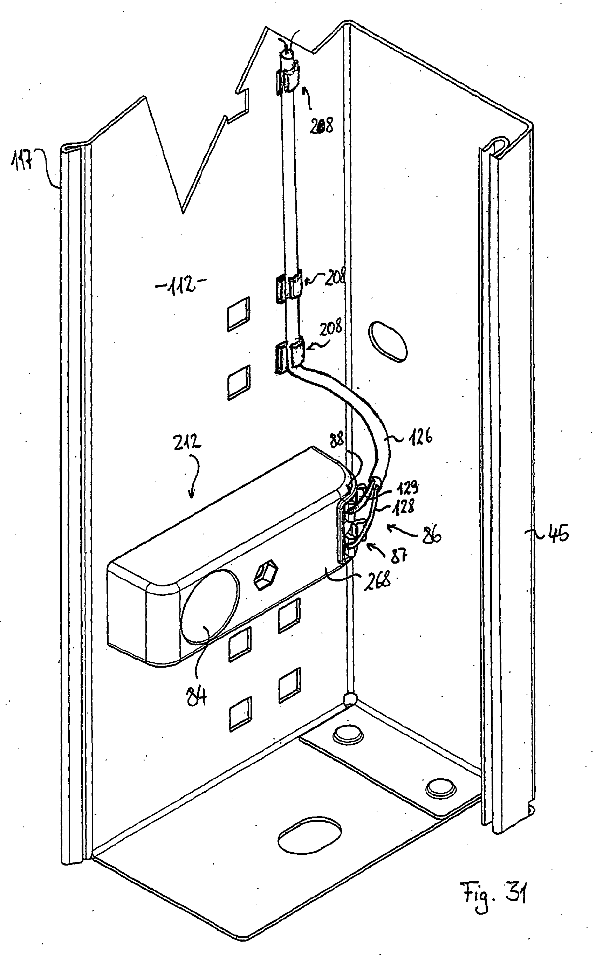

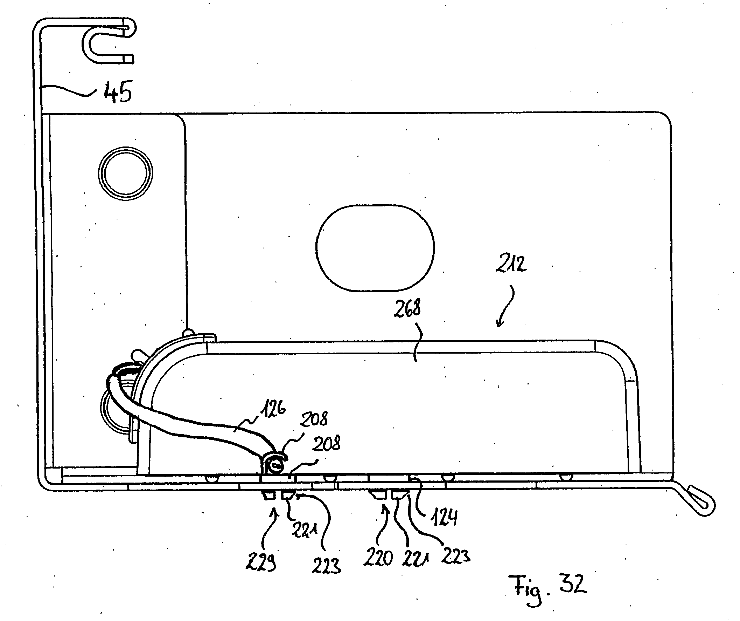

In den Fig. 30 bis 32 ist eine zweite Ausführungsform eines Lichtschrankenelements 212 am Beispiel einer solchen unmittelbaren Befestigung an der Torzarge 45 des Sektionaltores verdeutlicht dargestellt. Dabei sind für gleiche oder entsprechende Teile die gleichen Bezugszeichen wie bei der ersten Ausführungsform verwendet.

Das Lichtschrankenelement 212 der zweiten Ausführungsform entspricht bis auf das Lichtschrankengehäuse 268 dem Lichtschrankenelement 12 der ersten Ausführungsform. Das Lichtschrankengehäuse 268 der zweiten Ausführungsform unterscheidet sich von dem Lichtschrankengehäuse 68 der ersten Ausführungsform allein durch eine erste Rasteinrichtung 220 an der Rückseite 72.

Die erste Rasteinrichtung 220 weist anstelle der Durchgangsöffnung 74 vier Rastzungen 221 auf, die sich jeweils diametral gegenüber stehen und auf ihren voneinder weg gerichteten Seiten je mit einer Rastnase 223 versehen sind. Die Rastzungen 221 sind elastisch aufeinander zu bewegbar.

Damit kann die erste Rasteinrichtung 220 in die zur Lichtschrankenbefestigung vorgefertigte Bohrung 124 eingeklipst werden, so dass eine unmittelbare Positionierung an der L-Profil-Wandung 112 erfolgen kann. An der Innenseite der L-Profil-Wandung können in einer nicht näher dargestellten Ausgestaltung dieser Ausführungsform Positionierhilfen vorgesehen sein, um das Lichtschrankengehäuse in vorgegeben wählbarer Orientierung zu Positionieren. Diese Positionierhilfen können in Form von Anschlägen oder Ausnehmungen zum formschlüssigen Erfassung von Teilen des Lichtschrankengehäuses 268 vorgesehen sein.

Weiter sind in den Fig. 30 bis 32 alternative Ausführungen von Kabelklemmen 208 dargestellt, die mittels jeweils einer an der Kabelklemme 208 integral vorhandenen zweiten Rasteinrichtungen 229 in quadratische Öffnungen 130 an der Torzarge 45 verrastbar sind. Diese quadratischen Öffnungen 130 sind in regelmäßigen Abständen entlang der Torzarge 45 in der L-Profil-Wandung 112 vorgesehen. Auf diese Weise ist innerhalb des L-Profils der Torzarge 45 ein Weg zum geschützten und günstigen sowie einfachen Verlegen des Kabels 126 vorgegeben.

Die quadratischen Öffnungen 40 an dem Haltewinkel 18 haben in einer bevorzugten Ausführungsform die gleichen Abmessungen wie die quadratischen Öffnungen 130 an der Torzarge 45. Daher kann bei Bedarf eine der Kabelklemmen 208 auch in eine der quadratischen Öffnungen 40 am Haltwinkel eingeklipst werden, um das Kabel 126 im unmittelbaren Nahbereich des Lichtschrankenelements 12 oder 212 zu führen und zu fixieren. So kann das Kabel 126 zum Beispiel sicher hinter dem Haltewinkel 18 herum geführt werden, so dass- auch bei Auftreten von zum Beispiel durch Wind oder Erschütterungen bedingten Bewegungen - keine Störung des Lichtweges durch das Kabel 126 auftreten kann.

In den Fig. 30 bis 32 sind außerdem die zwei Litzen 128 und 129 des Kabels 126 und deren Anschluss an die Klemmanschlüsse 87 und 88 dargestellt.

Die erste Schraubbefestiger-Öffnung 46 des die Haltevorrichtung 10 gemäß der ersten Ausführungsform bildenden Haltewinkels 18 ist in ihren Abmessungen vergleichbar zu der Bohrung 124 an der Torzarge 45 ausgeführt. Anstelle der in den Figuren 30 bis 32 zu Erläuterungszwecken dargestellten unmittelbaren Befestigung des Lichtschrankengehäuses 268 kann das Lichtschrankenelement 212 gemäß der zweiten Ausführungsform somit auch mit der ersten Rasteinrichtung an den Haltewinkel 18 angeklipst werden und dann wie bei der ersten Ausführungsform beschrieben im Bereich eines beliebigen Tores mittels des Haltewinkels 18 in wählbarer Anordnung befestigt werden.

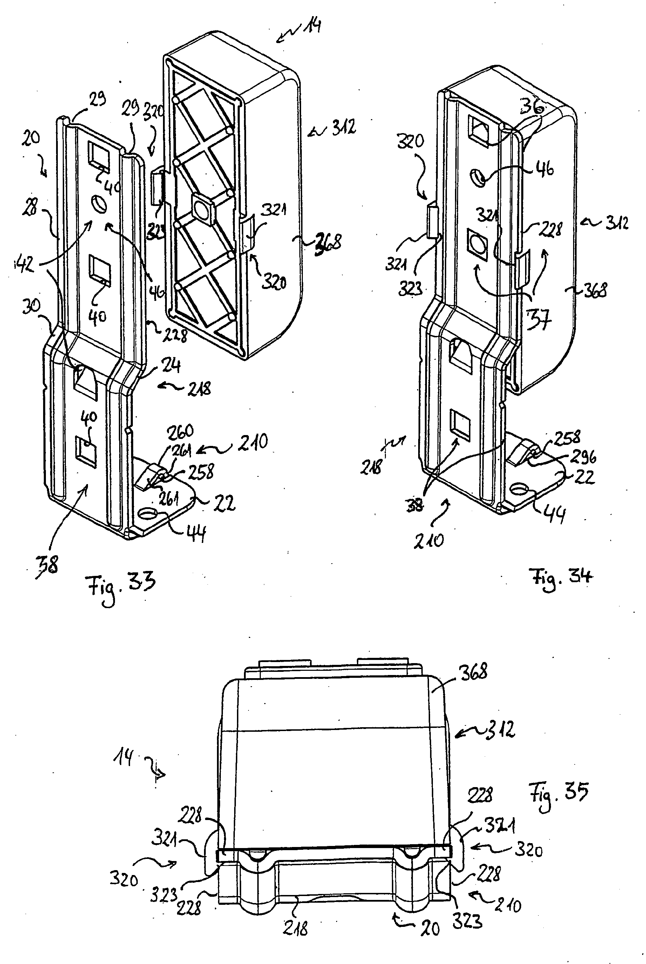

In den Fig. 33 bis 35 ist eine zweite Ausführungsform einer Haltevorrichtung 210 mit einem abgewandelten Haltewinkel 218 zur Befestigung eines Lichtschrankenelements 12, 212, 312 zusammen mit einem Lichtschrankenelement 312 gemäß einer dritten Ausführungsform dargestellt. Dabei sind für entsprechende Teile die gleichen Bezugszeichen wie bei den zuvor erläuterten Ausführungsformen verwendet; und es wird für nähere Einzelheiten hierzu auf die obigen Ausführungen verwiesen.

Der Haltewinkel 218 gemäß der zweiten Ausführungsform unterscheidet sich von dem ersten Haltewinkel 18 der ersten Ausführungsform lediglich darin, dass die Ausnehmung 96 mit der zugeordneten zweiten Lasche 60 fehlt. Anstelle dessen weist die zweite Torbefestigungseinrichtung 43 bei diesem Haltewinkel 218 an dem zweiten Schenkel 22 eine dritte Lasche 260 auf, die im Bereich des freien Endes des zweiten Schenkels 22 angeordnet ist. Die dritte Lasche 260 ist mit einem längeren mittleren Bereich 261 zunächst schräg auf die Seite des ersten Schenkel 20 zurückgebogen und am Endbereich wieder zurück zum zweiten Schenkel 22 hin gebogen so dass ein abgewinkeltes Ende 262 gebildet ist. Die dritte Lasche 260 verläuft innerhalb einer ausgeschnittenen Ausnehmung 296 im freien Endbereich des zweiten Schenkels 22 und steht so nur nach innen zum ersten Schenkel 20 hin vor. Der Haltewinkel 218 kann so mit seiner Rückseite auch sehr nahe an einer Wandung angelegt werden, ohne dass die rückseitige Lasche 60 stört. Wird die zweite Anschlageinrichtung 43 als Positionierhilfe wie oben beschrieben benötigt, so kann man die dritte Lasche 260 hinunterdrücken, bis das abgebogene Ende 262 unterhalb des zweiten Schenkels 22 etwa rechtwinklig vorsteht. Dadurch ist an der Unterseite des zweiten Schenkels 22 eine dritte Anschlageinrichtung 258 gebildet, die wie die zweite Anschlageinrichtung 58 der ersten Ausführungsform einsetzbar ist. Aufgrund des längeren mittleren Bereichs 261 ist zum Herunterdrücken ein größerer Hebel als beim Heraufdrücken der zweiten Lasche 60 der ersten Ausführungsform gebildet, so dass insgesamt eine leichtere Handhabung möglich ist.

Das Lichtschrankengehäuse 368 gemäß der dritten Ausführungsform ist wie das Lichtschrankengehäuse 68 der ersten Ausführungsform ausgebildet, wobei lediglich zusätzlich auf der Rückseite 72 eine dritte Rasteinrichtung 320 zum Einrasten an den langen Außenkanten 228 des Haltewinkels 18, 218 ausgebildet ist.

Die dritte Rasteinrichtung 320 weist mittig an den längeren Seitenkanten der Rückseite 72 des Lichtschrankengehäuses 368 jeweils eine Rastzunge 321 auf. Jede Rastzunge 321 weist auf der nach innen zu dem Lichtschrankengehäuse gerichteten Seite eine Rastnase 323 auf, mit der die Außenkanten 228 hintergreifbar sind. Hierzu können die Rastzungen 320 elastisch voneinander weg bewegt werden.

Gemäß einer nicht näher dargestellten weiteren Ausführungsform sind zwei der quadratischen Öffnungen 40 an dem Haltewinkel 18, 218 soweit voneinander entfernt und derart ausgebildet, dass die beiden Rastzungen 320 auch in den beiden quadratischen Öffnungen 40 eingreifen können und die dortigen Berandungen klemmend hintergreifen können. Dadurch kann das Lichtschrankengehäuse 368 wahlweise in einer mit dem Haltewinkel 18, 218 ausgerichteten Orientierung, wie in Fig. 33 bis 35 gezeigt, oder in einer zur Längserstreckung des Haltewinkels 18, 218 senkrechten Orientierung, wie etwa in Fig. 14 gezeigt mit dem Haltewinkel 18, 218 verrastet werden. Dabei sind Maßnahmen an dem Haltewinkel 18, 218 und/oder dem Lichtschrankengehäuse 368 getroffen, dass der Vorsprung 80 durch entsprechende Formgebung auch in der rechtwinkligen Ausrichtung in eine entsprechende Öffnung (nicht dargestellt) am Haltewinkel 18, 218 eingreifen kann.

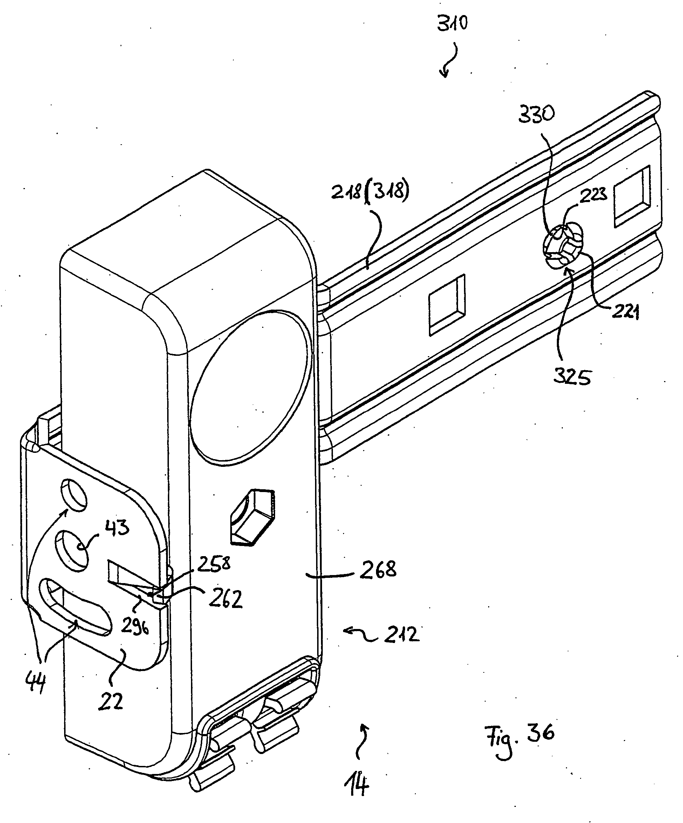

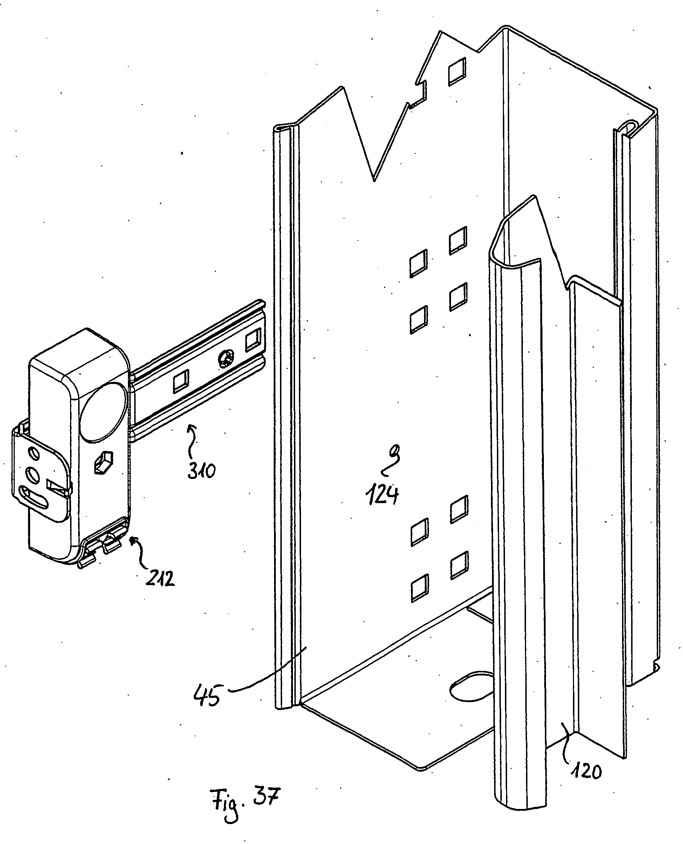

Die Fig. 36 bis 38 zeigen schließlich noch eine dritte Ausführungsform der Haltevorrichtung 310, die im wesentlichen der ersten oder zweiten Ausführungsform entspricht, mit dem Unterschied, dass an dem Haltewinkel 318 eine vierte Rastvorrichtung 325 ausgebildet ist, mittels welcher der Haltewinkel 318 an der Torzarge 45 befestigbar ist. Die dritte Rasteinrichtung 325 ist hierzu wie die erste Rasteinrichtung 220 mit den vier Rastzungen 221 ausgebildet. Dadurch kann die dritte Rasteinrichtung 325 in der Bohrung 124 der Torzarge 45 verrastet werden.

Zum Herstellen der dritten Rasteinrichtung 325 kann der Haltewinkel 318 gemäß der dritten Ausführungsform ganz aus Kunststoff im Spritzgussverfahren hergestellt sein, wobei die dritte Rasteinrichtung 325 anstelle der Schraubbefestiger-Öffnung 46 des Haltewinkels 18 der ersten Ausführungsform integral mit angeformt wird. Alternativ kann der Haltewinkel 218 oder 18 der zweiten oder ersten Ausführungsform verwendet werden, wobei in die Schraubbefestiger-Öffnung 46 ein stiftförmiges Klipsbefestigerelement 330 eingesetzt ist, das auf dem in der Darstellung von Fig. 36 durch den Haltewinkel 218 verdeckten Ende mit einem flachen breiteren Kopf (nicht dargestellt) versehen ist, dann mit einem Halsbereich die Öffnung 46 durchgreift und an dem Halbereich mit den Rastzungen 221 versehen ist. Mit Hilfe eines solchen Klipsbefestigerelements 330 lässt sich der Haltewinkel 218 ohne Werkzeug einfach durch Klipsen an der Bohrung 124 befestigen.

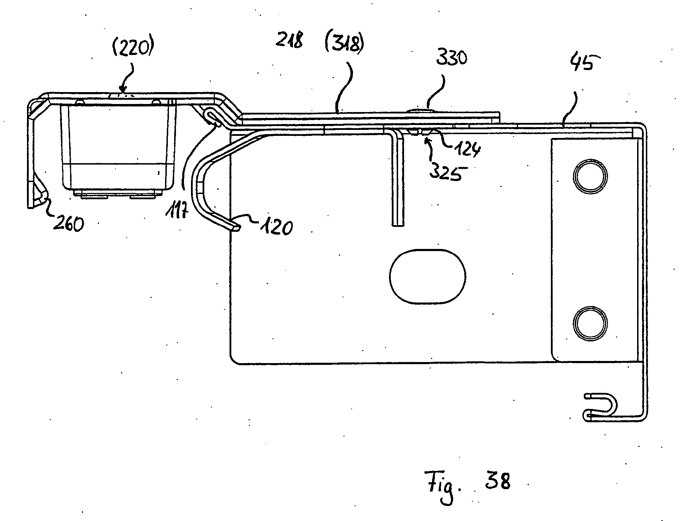

Ansonsten erfolgt die Befestigung, wie aus Fig. 38 ersichtlich, analog zu der Schraubbefestigung gemäß den Fig. 21 bis 27.

### BEZUGSZEICHENLISTE

- 10: Haltevorrichtung (erste Ausführungsform)
- 12: Lichtschrankenelement (erste Ausführungsform)
- 14: Lichtschrankenvorrichtung
- 18: Haltewinkel (erste Ausführungsform)
- 20: erster Schenkel
- 22: zweiter Schenkel
- 24: Kröpfung
- 26: erster Bereich
- 28: zweiter Bereich
- 29: Sicken
- 30: schräger Verbindungsbereich
- 34: Längsmittellinie
- 36: erste Lichtschrankenbefestigungseinrichtung
- 37: zweite Lichtschrankenbefestigungseinrichtung
- 38: dritte Lichtschrankenbefestigungseinrichtung
- 40: quadratische Öffnung
- 42: erste Torbefestigungseinrichtung
- 43: zweite Torbefestigungseinrichtung
- 44: Boden- oder Wandbefestigungseinrichtung
- 45: Torzarge (Sektionaltor)
- 46: erste Schraubbefestiger-Öffnung
- 48: erste Anschlageinrichtung
- 50: Hintergreifeinrichtung
- 52: Lasche
- 53: Innenfläche Lasche
- 54: Innenfläche Verbindungsbereich
- 56: zweite Schraubbefestiger-Öffnung
- 58: zweite Anschlageinrichtung
- 60: zweite Lasche
- 62: erste Schraubbefestiger-Öffnung der Boden- oder Wandbefestigungseinrichtung
- 63: zweite Schraubbefestiger-Öffnung der Boden- oder Wandbefestigungseinrichtung
- 64: gebogenes Langloch
- 66: abgeschrägter Verstärkungsbereich
- 68: Lichtschrankengehäuse (erste Ausführungsform)
- 70: Vorderseite
- 72: Rückseite
- 74: Durchgangsöffnung
- 76: Sechskantschraube
- 78: Sechskantausnehmung
- 80: quadratischer Vorsprung
- 82: Vorsprünge
- 84: Fotodiode
- 86: Anschlussvorrichtung
- 87: Klemmanschluss
- 88: Klemmanschluss
- 89: Kontaktelement
- 90: Fingergriff/Fingermulde
- 92: Mutter
- 94: Schraube-Dübel-Kombination
- 96: Ausnehmung
- 98: Torzarge (Schwingtor)
- 100: Schrauböffnung
- 102: Wandung
- 104: Kante
- 106: Gewindeschneidende Schraube
- 108: Kabelklemme
- 110: Kabelklemme
- 112: L-Profil-Wandung
- 114: Rückfaltung
- 115: Rückfaltung
- 117: Endkante
- 120: Laufschienen
- 122: Kantenausbildung
- 124: (Schrauböffnung) Bohrung
- 126: zweilitziges Kabel
- 128: erste Litze
- 129: zweite Litze
- 130: quadratische Öffnungen an Torzarge
- 208: Kabelklemme
- 210: Haltevorrichtung (zweite Ausführungsform)
- 212: Lichtschrankenelement (zweite Ausführungsform)
- 218: Haltewinkel (zweite Ausführungsform)
- 220: erste Rasteinrichtung
- 221: Rastzunge
- 223: Rastnase
- 228: Außenkanten des Haltewinkels
- 229: zweite Rasteinrichtung
- 258: dritte Anschlageinrichtung
- 260: dritte Lasche
- 261: mittlerer Bereich
- 262: abgewinkeltes Ende
- 296: ausgeschnittene Ausnehmung
- 268: Lichtschrankengehäuse (zweite Ausführungsform)
- 310: Haltevorrichtung (dritte Ausführungsform)
- 318: Haltewinkel (dritte Ausführungsform)
- 320: dritte Rasteinrichtung
- 321: Rastzunge
- 323: Rastnase
- 325: vierte Rasteinrichtung
- 368: Lichtschrankengehäuse (dritte Ausführungsform)

## Patentansprüche

1. Haltevorrichtung (10, 18; 210, 218; 310, 318) zum Befestigen eines Lichtschrankenelements (12; 212; 312) einer Lichtschrankenvorrichtung (14) im Bereich einer durch ein Tor zu verschließenden Öffnung, mit:
wenigstens einer Lichtschrankenbefestigungseinrichtung (36, 37, 38) zum Befestigen des Lichtschrankenelements (12; 212; 312) an der Haltevorrichtung (10; 210; 310),
wenigstens einer ersten Torbefestigungseinrichtung (42) zum Befestigen der Haltevorrichtung (10; 210; 310) an einem Element (45) eines ersten Tortyps, und
a) wenigstens einer zweiten Torbefestigungseinrichtung (43) zum Befestigen der Haltevorrichtung (10; 210; 310) an einem Element (98) eines zweiten Tortyps und/oder
b) wenigstens einer Boden- oder Wandbefestigungseinrichtung (44) zum Befestigen der Haltevorrichtung (10; 210; 310) an dem Boden oder an einer im Bereich einer Toröffnung vorhandenen Wand,
wobei die Haltevorrichtung (10; 210; 310) als Haltewinkel (18; 218; 318) mit einem ersten Schenkel (20) und einem zweiten Schenkel (22) ausgebildet ist, **dadurch gekennzeichnet, dass** der erste Schenkel (20) gekröpft ausgebildet ist,
dass der erste Schenkel (20) länger als der zweite Schenkel (22) ausgebildet ist, dass der gekröpft ausgebildete erste Schenkel (20) einen zurückversetzten ersten Bereich (26) hat, an dem einenends der zweite Schenkel (22) und anderenends ein zweiter Bereich (28) des ersten Schenkels (20) ansetzt, wobei der zweite Bereich (28) relativ zu dem ersten Bereich (26) in Richtung der Erstreckung des zweiten Schenkels vorversetzt ist.

2. Haltevorrichtung nach einem der voranstehenden Ansprüche,
**dadurch gekennzeichnet,**
**dass** wenigstens zwei voneinander beabstandete Lichtschrankenbefestigungseinrichtungen (36, 37, 38) vorgesehen sind zur Befestigung des Lichtschrankenelements (12) in unterschiedlichen Abständen von Torelementen (45, 98) und/oder zum Boden bzw. zu einer Wand und/oder zur Befestigung des Lichtschrankenelements (12; 212; 312) in unterschiedlichen Orientierungen und dass eine erste Lichtschrankenbefestigungseinrichtung (36) und wenigstens eine weitere Lichtschrankenbefestigungseinrichtung (37, 38) an dem ersten Schenkel (20) angeordnet sind,
wobei die erste (36) und eine zweite Lichtschrankenbefestigungseinrichtung (37) beide auf dem zweiten Bereich (28) angeordnet sind und/oder die erste Lichtschrankenbefestigungseinrichtung (36) auf dem zweiten Bereich (28) und eine weitere Lichtschrankenbefestigungseinrichtung (38) auf dem ersten Bereich (26) angeordnet sind.

3. Haltevorrichtung nach einem der voranstehenden Ansprüche,
**dadurch gekennzeichnet,**
**dass** die wenigstens eine Torbefestigungseinrichtung (42, 43) zur Befestigung der Haltevorrichtung (10; 210; 310) an einer Torzarge (45, 98) ausgebildet ist,
**dass** die wenigstens eine Torbefestigungseinrichtung (42, 43) eine Öffnung (46, 56) für einen Befestiger (106, 330), insbesondere Schraubbefestiger (106) oder Klipsbefestiger (330), und eine Anschlageinrichtung (48, 58) zum formschlüssigen und/oder verdrehfesten Erfassen einer Kante (104, 117) der Torzarge (45, 98) aufweist und dass die Anschlageinrichtung (48, 58) eine an der Haltevorrichtung (10) vorstehende Lasche (52, 60) und/oder eine Kröpfung (24) aufweist.

4. Haltevorrichtung nach einem der voranstehenden Ansprüche,
**dadurch gekennzeichnet,**
**dass** sie zur Befestigung an einer Gliedertorzarge (45), die mit einer schräg vorstehenden Kantenausbildung (122, 117) versehen ist, gekröpft mit zwei im wesentlichen parallel versetzt zueinander verlaufenden Bereichen (26, 28) ausgebildet ist, wobei an einem ersten Bereich (26) wenigstens eine Lichtschrankenbefestigungseinrichtung (36, 37) ausgebildet ist und an dem zweiten Bereich (28) eine zum Eingriff eines Befestigers (106, 330) ausgebildete Öffnung (46) wenigstens einer ersten Torbefestigungseinrichtung (42) oder ein integral mit dem Haltewinkel ausgebildeter Befestiger (325) wenigstens einer ersten Torbefestigungseinrichtung (42) ausgebildet ist.

5. Haltevorrichtung nach Anspruch 4,
**dadurch gekennzeichnet,**
**dass** die erste Torbefestigungseinrichtung (42) weiter an dem ersten Bereich (26) im Nahbereich der Kröpfung (24) eine Hintergreifeinrichtung (50) aufweist, mit der die an der Kröpfung (24) anliegende Kantenausbildung (122) hintergreifbar ist.

6. Haltevorrichtung nach Anspruch 5,
**dadurch gekennzeichnet,**
**dass** die Hintergreifeinrichtung (50) mit der Kröpfung (24) eine Öffnungsweite zwecks Aufnahme der Kantenausbildung (122) von etwa 3 bis 4 mm, insbesondere etwa 3,5 mm bildet und/oder
**dass** die Kröpfung (24) sich in einem Winkel (α) von etwa 44° bis 48°, insbesondere etwa 46° zu den beiden Bereichen (26, 28) erstreckt.

7. Haltevorrichtung nach einem der Ansprüche 3 bis 6,
**dadurch gekennzeichnet,**
**dass** das Zentrum der Befestiger-Öffnung (46) bzw. des integralen Befestigers (325) der ersten Torbefestigungseinrichtung (42) von der Anschlageinrichtung (48) bzw. der Kröpfung (24) einen Abstand von etwa 44 bis 48 mm, insbesondere von etwa 46 mm hat.

8. Haltevorrichtung nach einem der voranstehenden Ansprüche,
**dadurch gekennzeichnet,**
**dass** sie zur Befestigung an einer Torzarge (98) eines Einblatt-Überkopf-Tores ausgebildet ist,
wobei an dem im wesentlichen rechtwinklig zu dem ersten Schenkel (20) verlaufenden zweiten Schenkel (22) die hierfür ausgebildete Torbefestigungseinrichtung (43) vorgesehen ist.

9. Haltevorrichtung nach Anspruch 8 und nach Anspruch 3,
**dadurch gekennzeichnet,**
**dass** die Anschlageinrichtung (58) der für die Befestigung an der Einblatt-Überkopftor-Zarge (98) ausgebildeten Torbefestigungseinrichtung (43) auf der dem ersten Schenkel (20) entgegengesetzten Seite des zweiten Schenkels (22) von dem zweiten Schenkel (20) abstrebend vorgesehen ist, vorzugsweise derart, dass die Anschlageinrichtung (58) der für die Befestigung an der Einblatt-Überkopftor-Zarge (98) ausgebildeten Torbefestigungseinrichtung (43) von dem Zentrum der zugeordneten Befestiger-Öffnung (56) oder eines zugeordneten integral ausgebildeten Befestigers einen Abstand von etwa 14 bis 16 mm, insbesondere etwa 15 mm hat.

10. Haltevorrichtung nach nach einem der voranstehenden Ansprüche,
**dadurch gekennzeichnet,**
**dass** die Boden- oder Wandbefestigungseinrichtung (44) an dem im wesentlichen rechtwinklig zu dem ersten Schenkel verlaufenden zweiten Schenkel (22) ausgebildet ist, und
**dass** die Boden- oder Wandbefestigungseinrichtung (44) eine erste Schraubbefestiger-Öffnung (62) für einen ersten Schraubbefestiger (94) und eine davon beabstandete zweite Schraubbefestiger-Öffnung (63) für einen zweiten Schraubbefestiger (94) aufweist,
wobei die zweite Schraubbefestiger-Öffnung (63) ein um die erste Schraubbefestiger-Öffnung (62) als Mittelpunkt gebogenes Langloch (64) ist.

11. Haltevorrichtung nach einem der voranstehenden Ansprüche,
**dadurch gekennzeichnet,**
**dass** die Lichtschrankenbefestigungseinrichtung (36, 37, 38) und/oder wenigstens eine Torbefestigungseinrichtung (42, 43) als Teil einer Klips- oder Rastverbindung ausgebildet ist und
a) **dass** die Lichtschrankenbefestigungseinrichtung (36, 37, 38) eine durch eine Rasteinrichtung (220, 320) der Lichtschrankenvorrichtung (212, 312) hintergreifbare Ausnehmung (46) oder Kantenausbildung (228; 40) aufweist und dass wenigstens eine Torbefestigungseinrichtung (42) eine weitere Rasteinrichtung (325) aufweist, die zum Hintergreifen einer entsprechenden Ausnehmung (124) oder Kantenausbildung (130) an dem Element (45) eines Tores ausgebildet ist und/oder
b) **dass** die wenigstens eine Torbefestigungseinrichtung eine durch eine Rasteinrichtung am Tor hintergreifbare Ausnehmung oder Kantenausbildung aufweist und dass die Lichtschrankenbefestigungseinrichtung eine weitere Rasteinrichtung aufweist, die zum Hintergreifen einer entsprechenden Ausnehmung oder Kantenausbildung an der Lichtschrankenvorrichtung ausgebildet ist.

12. Lichtschrankenvorrichtung (14) für einen Torantrieb,
**gekennzeichnet durch** wenigstens ein Lichtschrankenelement (12; 212; 312) mit Lichtschrankengehäuse (68; 268; 368) und wenigstens eine Haltevorrichtung (10; 210; 310) nach einem der voranstehenden Ansprüche.

13. Torantriebssystem zum Antreiben eines Tores,
**gekennzeichnet durch** einen Torantrieb mit Motor und Steuerung und **durch** wenigstens eine Lichtschrankenvorrichtung (14) bzw. wenigstens eine Haltevorrichtung (10; 210; 310) nach einem der voranstehenden Ansprüche.

14. Torsystem, umfassend
• unterschiedliche Tortypen jeweils mit einem zur Lichtschrankenmontage mittels einer Haltevorrichtung (10; 210; 310) nach einem der Ansprüche 1 bis 11 an die Haltevorrichtung angepasstem Torelement, insbesondere Zarge (45, 98),
• die Haltevorrichtung (10; 210; 310),
• eine Lichtschrankenvorrichtung (14), montierbar mit der Haltevorrichtung und
• einen oder mehrere unterschiedliche Torantriebstypen, geeignet zum Antreiben wenigstens eines der Tortypen und ansteuerbar mittels der Lichtschrankenvorrichtung (14).

## Claims

1. Retaining arrangement (10, 18; 210, 218; 310, 318) for attaching a light barrier element (12; 212; 312) of a light barrier device (14) in the region of an aperture that is to be closed off by a door, having:
at least one light barrier fixing device (36, 37, 38) for attaching the light barrier element (12; 212; 312) to the retaining arrangement (10; 210; 310),
at least one first door fixing device (42) for fixing the retaining arrangement (10; 210; 310) to an element (45) of a first type of door, and
a) at least one second door fixing device (43) for fixing the retaining arrangement (10; 210; 310) to an element (98) of a second type of door, and/or
b) at least one floor or wall fixing device (44) for fixing the retaining arrangement (10; 210; 310) to the floor or to a wall located in the vicinity of a door aperture,
the retaining arrangement (10; 210; 310) being configured as a retaining angle member (18; 218; 318) having a first member (20) and a second member (22),
**characterised in that** the first member (20) is elbowed,
**in that** the first member (20) is longer than the second member (22), **in that** the elbowed first member (20) has a set-back first region (26) to which is attached the second member (22) at one end and a second region (28) of the first member (20) at the other end, the second region (28) being advanced relative to the first region (26) in the direction of extent of the second member.

2. Retaining arrangement according to one of the preceding claims,
**characterised in that**
at least two spaced-apart light barrier fixing devices (36, 37, 38) are provided for fixing the light barrier element (12) at different spacings from door elements (45, 98) and/or to the floor or to a wall and/or for fixing the light barrier element (12; 212; 312) in different orientations, and **in that** a first light barrier fixing device (36) and at least one other light barrier fixing device (37, 38) are arranged on the first member (20),
the first (36) and a second light barrier fixing device (37) both being arranged on the second region (28) and/or
the first light barrier fixing device (36) being arranged on the second region (28) and another light barrier fixing device (38) being arranged on the first region (26).

3. Retaining arrangement according to one of the preceding claims,
**characterised in that**
the at least one door fixing device (42, 43) is configured for fixing the retaining arrangement (10; 210; 310) to a door frame (45, 98),
**in that** the at least one door fixing device (42, 43) comprises an opening (46, 56) for a fastener (106, 330), particularly a screw fastener (106) or clip fastener (330), and an abutment device (48, 58) for interlockingly and/or non-rotationally gripping an edge (104, 117) of the door frame (45, 98), and **in that** the abutment device (48, 58) comprises a plate (52, 60) protruding from the retaining arrangement (10) and/or an elbow (24).

4. Retaining arrangement according to one of the preceding claims,
**characterised in that**
for the purpose of attachment to a frame (45) for a sectional door, which is provided with a diagonally projecting edge construction (122, 117), it is of elbowed configuration with two regions (26, 28) extending substantially parallel and offset from one another, wherein on a first region (26) is formed at least one light barrier fixing device (36, 37) and on the second region (28) is formed an opening (46) for engagement of a fastener (106, 330) of at least one first door fixing device (42), or a fastener (325), integrally formed with the retaining angle member, of at least one first door fixing device (42).

5. Retaining arrangement according to claim 4, **characterised in that**
the first door fixing device (42) further comprises on the first region (26) in the vicinity of the elbow (24) an engaging device (50) which is able to engage behind the edge construction (122) abutting on the elbow (24).

6. Retaining arrangement according to claim 5, **characterised in that**
the engaging device (50) forms, with the elbow (24), an opening width for accommodating the edge construction (122) of about 3 to 4 mm, particularly about 3.5 mm, and/or
**in that** the elbow (24) extends at an angle (α) of about 44° to 48°, particularly about 46°, to both regions (26, 28).

7. Retaining arrangement according to one of claims 3 to 6, **characterised in that**
the centre of the fastener opening (46) or the integral fastener (325) of the first door fixing device (42) is at a spacing from the abutment device (48) or the elbow (24) of about 44 to 48 mm, more particularly about 46 mm.

8. Retaining arrangement according to one of the preceding claims, **characterised in that**
it is configured for attachment to a door frame (98) of a single-panel up-and-over door,
wherein the door fixing device (43) constructed for this purpose is provided on the second member (22) that extends substantially at right angles to the first member (20).

9. Retaining device according to claim 8 and claim 3, **characterised in that**
the abutment device (58) of the door fixing device (43) configured for fixing to the single-panel up-and-over door (98) is provided on the side of the second member (22) opposite the first member (20), tending away from the second member (20),
preferably such that the abutment device (58) of the door fixing device (43) configured for attachment to the single-panel up-and-over door (98) is at a spacing from the centre of the associated fastener opening (56) or an associated integrally constructed fastener of about 14 to 16 mm, more particularly about 15 mm.

10. Retaining arrangement according to one of the preceding claims, **characterised in that**
the floor or wall fixing device (44) is formed on the second member (22) which extends substantially at right-angles from the first member, and
**in that** the floor or wall fixing device (44) has a first screw fastener opening (62) for a first screw fastener (94) and, spaced therefrom, a second screw fastener opening (63) for a second screw fastener (94),
the second screw fastener opening (63) being an elongate hole (64) that is bent around the first screw fastener opening (62) as the middle point.

11. Retaining arrangement according to one of the preceding claims, **characterised in that**
the light barrier fixing device (36, 37, 38) and/or at least one door fixing device (42, 43) is embodied as part of a clip or latch connection, and
a) **in that** the light barrier fixing device (36, 37, 38) has a recess (46) or edge construction (228; 40) behind which a latching device (220, 320) of the light barrier device (212, 312) can engage, and **in that** at least one door fixing device (42) has another latching device (325) which is configured for engaging behind a corresponding recess (124) or edge construction (130) on the element (45) of a door, and/or
b) **in that** the at least one door fixing device has a recess or edge construction behind which a latching device on the door can engage, and **in that** the light barrier fixing device comprises another latching device which is configured for engaging behind a corresponding recess or edge construction on the light barrier device.

12. Light barrier device (14) for a door drive,
**characterised by** at least one light barrier element (12; 212; 312) with a light barrier housing (68; 268; 368) and at least one retaining arrangement (10; 210; 310) according to one of the preceding claims.

13. Door drive system for driving a door,
**characterised by** a door drive with motor and control and by at least one light barrier device (14) or at least one retaining arrangement (10; 210; 310) according to one of the preceding claims.

14. Door system, comprising
• different types of door, each having a door element, particularly a frame (45, 98), that is matched to the light barrier fitting by means of a retaining arrangement (10; 210; 310) according to one of claims 1 to 11,
• the retaining arrangement (10; 210; 310),
• a light barrier device (14) that can be mounted with the retaining arrangement, and
• one or more different types of door drive, suitable for driving at least one of the types of door and controllable by means of the light barrier device (14).

## Revendications

1. Dispositif de maintien (10, 18 ; 210, 218 ; 310, 318) pour fixer un élément de barrière lumineuse (12 ; 212 ; 312) d'un dispositif de barrière lumineuse (14) dans la zone d'une ouverture à fermer par une porte comprenant :
- au moins une installation de fixation de barrière lumineuse (36, 37, 38) pour fixer un élément de barrière lumineuse (12 ; 212 ; 312) sur le dispositif de maintien (10 ; 210 ; 310),
- au moins une première installation de fixation de porte (42) pour fixer le dispositif de maintien (10 ; 210 ; 310) à un élément (45) d'un premier type de porte, et
a) au moins une seconde installation de fixation de porte (43) pour fixer le dispositif de maintien (10 ; 210 ; 310) à un élément (98) d'un second type de porte, et/ou
b) au moins une installation de fixation de sol ou de paroi (44) pour fixer le dispositif de maintien (10 ; 210 ; 310) au sol ou à une paroi située dans la zone de l'ouverture de porte,
* le dispositif de maintien (10 ; 210 ; 310) étant réalisé sous la forme d'une cornière (18 ; 218 ; 318) ayant une première branche (20) et une seconde branche (22),
dispositif de maintien **caractérisé en ce que**
- la première branche (20) est recourbée,
- la première branche (20) est plus longue que la seconde branche (22),
- la première branche (20), recourbée, a une première zone (26) en retrait se poursuivant à une extrémité par la seconde branche (22) et à l'autre extrémité par une seconde zone (28) de la première branche (20),
* la seconde zone (28) étant décalée vers l'avant par rapport à la première zone (26) dans la direction de l'extension de la seconde branche.

2. Dispositif de maintien selon la revendication 1,
**caractérisé par**
- au moins deux installations de fixation de barrière lumineuse (36, 37, 38) écartées l'une de l'autre pour fixer l'élément de barrière lumineuse (12) à des écartements différents d'éléments de porte (45, 98) et/ou par rapport au sol et/ou par rapport à une paroi et/ou pour fixer l'élément de barrière lumineuse (12 ; 212 ; 312) suivant des orientations différentes, et
- une première installation de fixation de barrière lumineuse (36) et au moins une autre installation de fixation de barrière lumineuse (37, 38) munie de la première branche (20),
* la première installation de fixation de barrière lumineuse (36) et la seconde installation de fixation de barrière lumineuse (37) étant situées toutes deux dans la seconde zone (28), et/ou
* la première installation de fixation de barrière lumineuse (36) est prévue dans la seconde zone (28) et une autre installation de fixation de barrière lumineuse (38) est prévue dans la première zone (26).

3. Dispositif de maintien selon l'une des revendications précédentes,
**caractérisé en ce qu'**
- au moins une installation de fixation de porte (42, 43) est réalisée pour fixer le dispositif de maintient (10 ; 210 ; 310) sur une feuillure de porte (45, 98),
- au moins une installation de fixation de porte (42, 43) comporte une ouverture (46, 56) pour un moyen de fixation (106, 330), notamment un moyen de fixation à vis (106) ou un moyen de fixation par enclipage (330) ainsi qu'une installation de montage (48, 58) pour recevoir par une liaison par la forme et/ou une liaison solidaire en rotation, une arête (104, 117) de la feuillure de porte (45, 98), et
- l'installation de montage (48, 58) comporte une patte (52, 60) en saillie du dispositif de maintien (10) et/ou une partie recourbée (24).

4. Dispositif de maintien selon l'une des revendications précédentes,
**caractérisé en ce qu'**
il est prévu pour être fixé à une feuillure de porte sectionnelle (45) ayant une forme d'arête venant en saillie en biais (122, 117), recourbée, ayant deux zones (26, 28) essentiellement parallèles, décalées l'une par rapport à l'autre,
* la première zone (26) ayant au moins une installation de fixation de barrière lumineuse (36, 37), et
* la seconde zone (28) ayant une ouverture (46) pour la prise d'un moyen de fixation (106, 330) d'au moins une première installation de fixation de porte (42) ou faisant corps avec le moyen de fixation (325) en forme de cornière d'au moins une première installation de fixation de porte (42).

5. Dispositif de maintien selon la revendication 4,
**caractérisé en ce que**
la première installation de fixation de porte (42) comporte plus loin, sur la première zone (26), à proximité de la partie recourbée (24), une installation en contre-dépouille (50) dans laquelle vient prendre la formation d'arête (122) appliquée contre la partie cintrée (24).

6. Dispositif de maintien selon la revendication 5,
**caractérisé en ce que**
- l'installation en contre-dépouille (50) avec la partie cintrée (24) a une largeur d'ouverture pour recevoir la formation d'arête (122) d'environ 3 à 4 mm, notamment de l'ordre de 3,5 mm, et/ou
- la partie cintrée (24) fait un angle (α) d'environ 44° à 48°, notamment de l'ordre de 46° par rapport aux deux zones (26, 28).

7. Dispositif de maintien selon l'une des revendications 3 à 6,
**caractérisé en ce que**
le centre de l'orifice de fixation (46) ou du moyen de fixation intégré (325) de la première installation de fixation de porte (42) est écarté de l'installation de montage (48) ou de la partie cintrée (24) d'une distance d'environ 44-48 mm et notamment de l'ordre de 46 mm.

8. Dispositif de maintien selon l'une des revendications précédentes,
**caractérisé en ce qu'**
il est réalisé pour être fixé à une feuillure de porte (98) d'une porte relevable à un seul panneau,
* comportant des secondes branches (22) pratiquement perpendiculaires à la première branche (20) pour l'installation de fixation de portail (43) prévu à cet effet.

9. Dispositif de maintien selon la revendication 8 et la revendication 3,
**caractérisé en ce que**
l'installation de montage (58) de l'installation de fixation de porte (43) réalisées pour être fixée à une feuillure de porte relevable à un seul panneau (98) est en saillie sur le côté de la seconde branche (22) à l'opposé de la première branche (20) pour venir en saillie par rapport à la première branche (20), de façon que l'installation de montage (58) de l'installation de fixation de porte (43) réalisée pour être fixée à la feuillure de porte relevable à un seul panneau (98) soit distante du centre de l'orifice de fixation associé (56) ou d'un moyen de fixation associé intégré, d'une distance d'environ 14-16 mm, notamment d'environ 15 mm.

10. Dispositif de maintien selon l'une des revendications précédentes,
**caractérisé en ce que**
- l'installation de fixation au sol ou au mur (44) est réalisée dans la seconde branche (22) qui est essentiellement perpendiculaire à la première branche, et
- l'installation de fixation au sol ou au mur (44) comporte un premier orifice de fixation de vis (62) pour un premier moyen de fixation à vis (94) et un second orifice de fixation de vis (63) écarté du premier, pour recevoir une seconde vis de fixation (94),
* le second orifice de vis de fixation (63) étant un trou oblong (64) en courbe autour du premier orifice de fixation (62) qui constitue le centre.

11. Dispositif de maintien selon l'une des revendications précédentes,
**caractérisé en ce que**
- l'installation de fixation de barrière lumineuse (36, 37, 38) et/ou au moins une installation de fixation de porte (42, 43) fait partie d'une liaison par enclipage ou par accrochage, et
a) l'installation de fixation de barrière lumineuse (36, 37, 38) comporte un orifice (46) ou une formation d'arêtes (228 ; 40) derrière laquelle peut venir prendre une installation d'accrochage (220, 320) du dispositif de barrière lumineuse (212, 312), et
- au moins une installation de fixation de porte (42) comporte une autre installation d'accrochage (325) réalisée pour venir prendre derrière un orifice (124) ou une formation d'arêtes (130) de l'élément (45), correspondant d'une porte, et/ou
b) au moins une installation de fixation de porte comporte un orifice ou une formation d'arêtes derrière laquelle peut venir prendre une installation d'accrochage de la porte, et
- l'installation de fixation de barrière lumineuse comporte une autre installation d'accrochage pour venir prendre derrière un orifice ou une formation d'arêtes correspondantes du dispositif de barrière lumineuse.

12. Dispositif de barrière lumineuse (14) pour un entraînement de porte,
**caractérisé par**
au moins un élément de barrière lumineuse (12 ; 212 ; 312) comportant un boîtier de barrière lumineuse (68 ; 268 ; 368) et au moins un dispositif de maintien (10 ; 210 ; 310) selon l'une des revendications précédentes.

13. Système d'entraînement de porte pour entraîner une porte,
**caractérisé par**
un entraînement de porte comportant un moteur et une commande et au moins un dispositif de barrière lumineuse (14) ou au moins un dispositif de maintien (10 ; 210 ; 310) selon l'une des revendications précédentes.

14. Système de porte comprenant :
* différents types de portes, chaque fois avec un montage de barrière lumineuse réalisé par un dispositif de maintien (10 ; 210 ; 310) selon l'une des revendications 1 à 11, sur un élément de porte, notamment une feuillure (45, 98) adaptée au dispositif de maintien,
* le dispositif de maintien (10 ; 210 ; 310),
* un dispositif de barrière lumineuse (14) installé avec le dispositif de maintien, et
* un ou plusieurs types de portes, différents, pour entraîner au moins l'un des types de portes et commandés par l'intermédiaire du dispositif de barrière lumineuse (14).
